# EUROPEAN PATENT APPLICATION

(11) **EP 4 580 217 A1**
(43) Date of publication of application: **02.07.2025**
(21) Application number: 24223608.1
(22) Date of filing: 30.12.2024
(51) Int. Cl.: H04S 7/00, H04R 3/12

(54) **APPARATUS AND METHOD FOR PROVIDING SEAT-BASED NATURESCAPES AUDIO**

(30) Priority: 29.12.2023 US 202363616233 P; 23.12.2024 US 202418999819
(71) Applicant: Harman International Industries, Inc., Stamford, Connecticut 06901 (US)
(72) Inventor: WINTON, Riley, Opelika, 36804 (US); SONG, Ray Dishan, 80809 München (DE); ANDREASEN, Kim Fiskbæk, 7480 Vildbjerg (DK)
(74) Representative: Kraus & Lederer PartGmbB

(57) **Abstract**

In at least one embodiment, a system including a mobile device is provided. The mobile device is positioned about a first seat in a vehicle. The mobile device includes at least one first controller programmed to communicate with an audio controller positioned in the vehicle and to generate, for selection, one or more options corresponding to a desired nature sound on a display. The at least one first controller is further programmed to transmit one or more options to select a desired nature sound on a display and to transmit a first signal indicative of the selected desired nature sound to the audio controller to playback the selected desired nature sound in the vehicle.

## Description

### TECHNICAL FIELD

Aspects disclosed herein generally related to an apparatus and method for providing seat-based naturescapes audio. These aspects and others will be discussed in more detail herein.

### BACKGROUND

Vehicles provide for a listening environment that differs greatly from the listening environment offered by different venues such as for example stadiums, festivals, recording studios, concert halls (e.g., large, medium, or small), etc. In general, sound recordings of audio captured in stadiums, festivals, recording studios, and concert halls, etc. may not translate well to the listening environment of a vehicle. For example, the listening environment within the vehicle is considerably smaller than the listening environment of the foregoing venues. Additionally, the listening environment for the vehicle provides for different sizes and shapes of various body shells (e.g., front side, rear side, left/right, and top) when compared to various sides or walls of the venues noted above. The different sizes and shapes that define the listening environment of the vehicle may make it difficult for sound recordings captured in other venues to translate into the vehicle. Therefore, the user experience in the vehicle suffers.

### SUMMARY

In at least one embodiment, a system including a mobile device is provided. The mobile device is positioned about a first seat in a vehicle. The mobile device includes at least one first controller programmed to communicate with an audio controller positioned in the vehicle and to generate, for selection, one or more options corresponding to a desired nature sound on a display. The at least one first controller is further programmed to transmit one or more options to select a desired nature sound on a display and to transmit a first signal indicative of the selected desired nature sound to the audio controller to playback the selected desired nature sound in the vehicle.

In at least one embodiment, a system for generating audio in a listening environment of a vehicle is provided. The system includes a memory device and at least one audio controller. The at least one audio controller includes the memory device and is programmed to receive a first signal indicative of a first selected desired nature sound from a first mobile device positioned about a first seat of the vehicle and to receive a second signal indicative of a second selected desired nature sound from a second mobile device positioned about a second seat of the vehicle, the second selected desired nature sound being different than the first selected desired nature sound. The at least one audio controller is further programmed to generate a first audio output signal including the first selected desired nature sound and a second audio output signal including the second selected desired nature sound and to transmit the first audio output signal to one of the first mobile device and a first loudspeaker positioned about the first seat to playback the first audio output signal. The at least one audio controller is further programmed to transmit the second audio output signal to one of the mobile device and a second loudspeaker positioned about the second seat to playback the second audio output signal.

In at least another embodiment, a method for generating audio in a listening environment of a vehicle is provided. The method includes receiving a first signal indicative of a first selected desired nature sound from a first mobile device positioned about a first seat of the vehicle and receiving a second signal indicative of a second selected desired nature sound from a second mobile device positioned about a second seat of the vehicle, the second selected desired nature sound being different than the first selected desired nature sound. The method further includes generating a first audio output signal including the first selected desired nature sound and a second audio output signal including the second selected desired nature sound and transmitting the first audio output signal to one of the first mobile device and a first loudspeaker positioned about the first seat to playback the first audio output signal. The method further includes transmitting the second audio output signal to one of the mobile device and a second loudspeaker positioned about the second seat to playback the second audio output signal.

### BRIEF DESCRIPTION OF THE DRAWINGS

The embodiments of the present disclosure are pointed out with particularity in the appended claims. However, other features of the various embodiments will become more apparent and will be best understood by referring to the following detailed description in conjunction with the accompany drawings in which:
FIG. 1 illustrates one example of a sound processing system in a vehicle for generating natural sounds;
FIG. 2 illustrates audio profiles for providing spatially mixed sound based on a scenic environment, an environmental condition, and a user emotional state;
FIG. 3 illustrates a schematic depiction of an example activity control;
FIG. 4 illustrates a schematic depiction of an activity control with example control regions;
FIG. 5 illustrates a schematic depiction of two activity controls with example control regions;
FIG. 6 illustrates plots of audio attributes that may be modified according to a state of the user interface shown in FIGs 4 - 6;
FIG. 7 illustrates an overview of a vehicle and a corresponding listening environment thereof for virtual venues;
FIG. 8 illustrates a method for generating virtual venues within the listening environment of the vehicle;
FIG. 9 illustrates a detailed view of the apparatus for generating virtual venues within the listening environment of the vehicle in accordance with one embodiment;
FIG. 10 illustrates one example of a user interface for controlling aspects related to naturescapes and virtual venues in accordance with one embodiment;
FIG. 11 illustrates another example of a first selection control as displayed on the user interface in accordance with another embodiment;
FIGs 12 - 21 illustrate a second selection control as displayed on the user interface in accordance with one embodiment;
FIG. 22 illustrates an example of a sphere associated with the second selection control in accordance with one embodiment;
FIG. 23 illustrates one example of venue and corresponding nature related features that comprise naturescape that may be presented on the user interface in accordance with one embodiment;
FIG. 24 illustrates one example of a universal selection field as presented on a user interface on the display in accordance with one embodiment;
FIG. 25 illustrates another example of a universal selection field as presented on a user interface on the display in accordance with one embodiment;
FIG. 26 illustrates an example of an image of an actual nature scene as presented on the user interface on the display in accordance with one embodiment;
FIG. 27 illustrates an example of various control mechanism for controlling aspects related to naturescapes in accordance with one embodiment;
FIG. 28 illustrates another example of various control mechanisms for controlling aspects related to naturescapes in accordance with one embodiment;
FIG. 29 illustrates another example of various control mechanism for controlling aspects related to naturescapes in accordance with another embodiment;
FIG. 30 illustrates a schematic diagram for generating naturescapes with an audio system in accordance with one embodiment;
FIG. 31 illustrates a method for generating audio in a listening room of a vehicle in accordance with one embodiment;
FIG. 32 illustrates one example of a user interface to enable a seat based extension of the playback of one or more naturescapes for one or more occupants positioned in a vehicle in accordance with one embodiment;
FIG. 33 illustrates one another example of a user interface to enable a seat-based extension of the one or more naturescapes for one or more occupants positioned in the vehicle in accordance with one embodiment;
FIG. 34 illustrates another example of a user interface to enable a seat-based extension of the one or more naturescapes for one or more occupants positioned in the vehicle in accordance with one embodiment;
FIG. 35 depicts a detailed example of the touch point relative to various naturescapes in accordance with one embodiment;
FIG. 36 depicts a detailed example of the manner in which the occupant selects various naturescapes and immersion level for the touch point in accordance with one embodiment;
FIG. 37 depicts a tutorial which illustrates the manner in which the occupant selects naturescape and the immersion level for the touch point in accordance with one embodiment; and
FIG. 38 depicts a schematic diagram for generating the seat based naturescapes with an audio system in accordance with one embodiment.

### DETAILED DESCRIPTION

The present disclosure will be described in detail below with reference to exemplary embodiments of the present disclosure. However, the present disclosure is not limited to the embodiments described herein, and it may be implemented in many different forms. The described embodiments are merely intended to make the present disclosure thorough and complete, and to fully convey the concept of the present disclosure to those skilled in the art. The features of the various embodiments described may be combined or substituted for each other unless expressly excluded or should be excluded according to the context.

Aspects disclosed herein generally provide for a system that provides audio related features for one or more passengers in a vehicle. For example, the disclosed system may provide audio related characteristics that include enabling occupants the ability to playback nature sounds while adjust various virtual venues. One example of an audio system that enables the playback of nature sounds in a vehicle is set forth in U.S. Patent No. 11,485,231 entitled "SYSTEMS AND METHODS FOR PROVIDING NATURE SOUNDS" as filed on December 4, 2020, which is hereby incorporated by reference in its entirety. In addition, one example of an audio system that enables the playback of audio in a vehicle based on virtual venues is set forth in U.S. Patent No. 10,728,691 entitled "APPARATUS AND METHOD FOR GENERATING VIRTUAL VENUES FOR A LISTENING ROONF ' as filed on August 29, 2019, which is hereby incorporated by reference in its entirety.

By broadcasting sound elements based on the at least one vehicle state, natural sounds may be automatically played in the vehicle. For example, when a vehicle is travelling in a scenic area, sound elements corresponding to natural sounds in the scenic area may be broadcast, in order to incorporate elements of the exterior environment into the sound environment of the vehicle. Further, when an environmental condition, such as weather, is detected, sound elements corresponding to the environmental condition may be played in order to alert a user to changes in the environmental condition. As another example, a user may be stressed, such as due to a stressful driving environment (e.g., traffic), and sound elements corresponding to a more peaceful exterior environment may be played, thus reducing a stress level of the user. Further, each sound element played in the vehicle may be spatially mixed in order to create an immersive, surround sound experience. For example, each sound element may be indexed to a virtual location outside the vehicle, and the virtual location outside the vehicle may be mapped to a virtual speaker space inside the vehicle.

In this way, a sound environment inside a vehicle may be adjusted based on at least one state of a vehicle, such as a vehicle location, an environmental condition, and an emotional state (e.g., mood) of a user. For example, by adjusting the sound environment based on the at least one state of the vehicle, a user engagement with an exterior environment may be increased, which may increase user satisfaction while driving the vehicle. Further, in some examples, adjusting the sound environment based on the at least one state of the vehicle may decrease user stress levels by reducing an effect of a stressful exterior environment, such as while driving in traffic. Overall, user stress levels may be reduced while user satisfaction is increased.

For the listening environment within a vehicle, aspects disclosed herein also generally provide a vehicle audio apparatus that alters audio parameters to make the audio or user experience within the vehicle sound like a different venue (e.g., stadium, concert hall (*i.e.,* large, small, or medium), festival, or recording studio). For example, the vehicle audio apparatus may alter audio parameters to make the vehicle sound like Carnegie Hall, Yankee Stadium, etc. based on a user selection. Moreover, the vehicle audio apparatus may be arranged to simply make the listening environment within the vehicle sound larger than it really is (e.g., if the vehicle is a compact vehicle, the vehicle audio apparatus may provide for the audio experience to sound like the user is in a sports utility vehicle ("SUV")). Thus, the disclosed embodiment may enable the vehicle to provide natural sounds and further enhance the playback of such natural sounds by enabling vehicle occupants to selectively increase the sensation that the driver or occupant is actually positioned within the nature scene that provides the natural sounds. These aspects and others will be discussed in more detail below.

### APPARATUS AND METHOD FOR RENDERING NATURE AUDIO AND VIRTUAL VENUE-BASED AUDIO

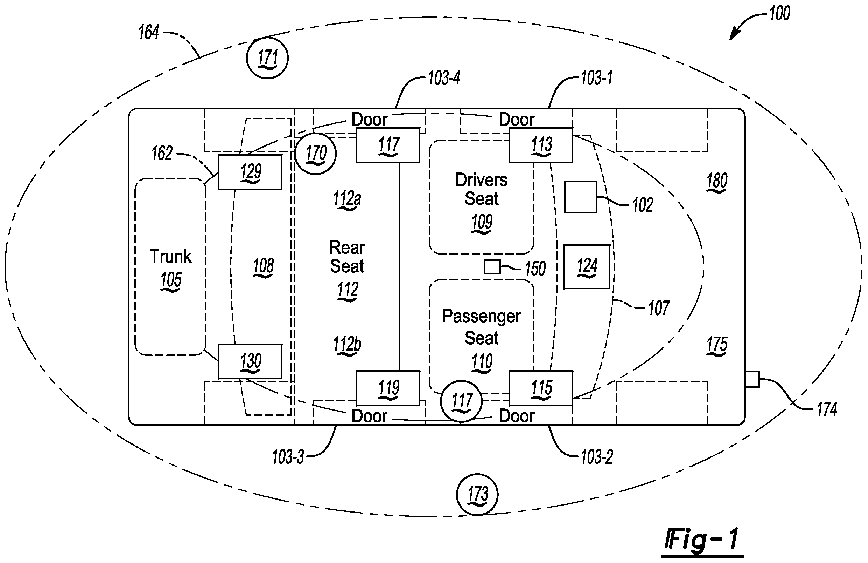

FIG. 1 is a block diagram of a vehicle 100 that includes an example audio or sound processing system (AS) (or audio system) 102, which may include any or a combination of the sound processing systems and methods described below. The vehicle 100 includes doors 103, a driver seat 109, a passenger seat 110, and a rear seat 112. While a four-door vehicle is shown including doors 103-1, 103-2, 103-3, and 103-4, the audio system (AS) 102 may be used in vehicles having more or fewer doors. The vehicle 100 may be an automobile, truck, boat, or the like. Although only one rear seat is shown, larger vehicles may have multiple rows of rear seats. Smaller vehicles may have only one or more seats. While a particular example configuration is shown, other configurations may be used including those with fewer or additional components.

The audio system 102 (which may include an amplifier and/or other at least one audio controller 175 for receiving, processing, and/or outputting audio to one or more speakers in the vehicle) which may improve the spatial characteristics of surround sound systems. The audio system 102 may include a variety of audio components such as radios, COs, DVDs, their derivatives, and the like. The audio system 102 may incorporate, for example, 2-channel source material such as direct left and right, 5.1 channel, 6.2 channel, 7 channel, 12 channel and/or any other source materials from a matrix decoder digitally encoded/decoded discrete source material, and the like. The audio system 102 may utilize multiple audio channels. For example, the audio system 102 may utilize a first channel for primary media, such as one or more of warning, media, navigational, and telephone/telematics sound elements. Further, a second channel may be used for secondary media such as for example, a naturescape feature. As such, both primary media and secondary media may be played substantially simultaneously via audio system 102.

The amplitude and phase characteristics of the source material and the reproduction of specific sound field characteristics in the listening environment may play a role in the successful reproduction of a surround sound field. As such, the audio system 102 may increase the reproduction of a surround sound field by controlling the sound delay time, surround upmixer parameters (e.g., wrap, reverb room size, etc.), amplitude, phase, and mixing ratio between discrete and passive decoder surround signals and/or the direct two-channel output signals, in at least one example. The amplitude, phase, and mixing ratios may be controlled between the discrete and passive decoder output signals. The spatial sound field reproduction may be increased for all seating locations by re-orientation of the direct, passive, and active mixing and steering parameters, especially in a vehicle environment.

The mixing and steering ratios as well as spectral characteristics may be adaptively modified as a function of the noise and other environmental factors. For example, the mixing and steering ratios may be adjusted based on a sensed sound level external to the vehicle. As another example, the mixing and steering ratios may be adjusted based on an estimated engine noise generated by the vehicle, such as by increasing a volume in response to increased engine noise. In a vehicle, information from the data bus, microphones, and other transduction devices may be used to control the mixing and steering parameters.

The vehicle 100 includes a front center speaker (CTR speaker) 124, a front left speaker (FL speaker) 113, a front right speaker (FR speaker) 115, and at least one pair of surround speakers.

The surround speakers may be a left side speaker (LS speaker) 117 and a right side speaker (RS speaker) 119, a left rear speaker (LR speaker) 129 and a right rear speaker (RR speaker) 130, or a combination of speaker sets. Other speaker sets may be used. While not shown, one or more dedicated subwoofers or other drivers may be present. Possible subwoofer mounting locations include a trunk 105, below a seat, or the rear shelf 108. The vehicle 100 may also have one or more microphones 174 mounted in the interior. For example, at least one microphone 174 may be mounted near each seat of the vehicle 100 in order to capture audio from users, such as voice commands.

Each CTR speaker 124, FL speaker 113, FR speaker 115, LS speaker 117, RS speaker 119, LR speaker 129, and RR speaker 130 may include one or more transducers of a predetermined range of frequency response such as a tweeter, a mid-range, or a woofer. The tweeter, mid-range, or woofer may be mounted adjacent to each other in essentially the same location or in different locations. For example, the FL speaker 113 may be a tweeter located in door 103-1 or elsewhere at a height roughly equivalent to a side mirror or higher. The FR speaker 115 may have a similar arrangement to FL speaker 113 on the right side of the vehicle 100 (e.g., in door 103-2).

The LR speaker 129 and the RR speaker 130 may each be a woofer mounted in the rear shelf 108. The CTR speaker 124 may be mounted in the front dashboard 107, in the roof, on or near the rear-view mirror, or elsewhere in the vehicle 100. In other examples, other configurations of loudspeakers with other frequency response ranges are possible. In some embodiments, additional speakers may be added to an upper pillar in the vehicle to enhance the height of the sound image. For example, an upper pillar may include a vertical or near-vertical support of a car's window area. In some examples, the additional speakers may be added to an upper region of an "A" pillar toward a front of the vehicle.

Further still, in some examples, one or more speakers may be incorporated into a seat of the vehicle (e.g., one of driver seat 109, passenger seat 110, and rear seat 112 (or left rear passenger seat 112a and right rear passenger seat 112b) in order to increase a sonic quality. For example, a speaker may be integrated into a headrest of each of the driver seat 109, the passenger seat 110, and the rear seat 112. For example, left rear speaker 129 may be incorporated into a headrest of rear seat 112, and the RR speaker 130 may be incorporated into the headrest of rear seat 112. As another example, FL speaker 113 may be incorporated into a headrest of driver seat 109, and FR speaker 115 may be incorporated into a headrest of passenger seat 110. For example, incorporating speakers into headrests of the vehicle seats may enable more targeted sound mixing, such as increasing a media volume for a first user without significantly affecting the media volume for a second user. Further, incorporating speakers into headrests of vehicle seats may increase a user immersion in the media, such as in the environmental sound elements reproduced via audio system 102.

To enhance a media experience for occupants of the vehicle 100, the audio system 102 may include a naturescape feature. When the naturescape feature is activated, the audio system 102 may reproduce a plurality of sound elements (e.g., as secondary media via the second channel), such as pre-recorded natural sound elements and artificially generated reproductions of natural sound elements. The plurality of sound elements may be calibrated to provide a sonic representation of a natural environment or natural scene, such as a remote natural environment or an environment outside the vehicle. In some examples the plurality of sound elements may be provided in response to a user input (e.g., in a manual mode of the naturescape feature), while in other examples, the plurality of sound elements may be provided based on sensor data (e.g., in an automated mode of the naturescape feature). In the manual mode of the naturescape feature, a user may select a natural scene with associated sound elements, and the user may adjust a volume and frequency of the associated sound elements. In the automated mode of the naturescape feature, at least one vehicle controller 180 ("the vehicle controller 180) may determine one or more states associated with the vehicle 200 based on the sensor data (e.g., such as a vehicle location, an environmental condition, and an emotional state of a user), and may determine sound elements to play based on the one or more states.

Both primary media (e.g., such as music, a voice call, talk radio, etc.) and secondary media (e.g., provided by the naturescape feature) may be played via audio system 102 In some examples, the secondary media may be layered over the primary media without any adjustment to each of the primary media and the secondary media. As another example, the primary media may be ducked in response to the secondary media playing, in order to reduce a total audio volume in the vehicle, and to enhance sound quality of the secondary media. In some examples, an amount of ducking may be adjusted based on a media type. For example, talk radio may be ducked less than music, due to the wider sonic spectrum of music relative to the sonic spectrum of talk radio. As another example, the secondary media may be muted during a voice call (e.g., over the primary media channel) in order to increase clarity of the voice call. However, in some examples, a user may select to maintain the secondary media on during a voice call in order to share the sonic experience via the voice call.

Further, in each of the manual mode of the naturescape feature and the automated mode of the naturescape feature, spatial mixing may be used to provide an immersive, three-dimensional sound environment. For example, sound elements may be spatially mixed so that each sound element is perceived as originating in a spatial location. For example, wildlife sounds (e.g., such as bird sounds) may be spatially mixed so that the wildlife sounds are perceived to originate from a distinct spatial location. For example, each sound element may be continuously mapped to a virtual speaker region 162 or a distinct speaker element, and the virtual speaker region and/or each speaker may be adjusted in order to reproduce the perceived spatial location of the sound element. For example, each sound element may be indexed to a virtual location in a virtual sound space 164 (e.g., representing a space around the vehicle 100), and there may be a 1:1 mapping between the virtual sound space and the virtual speaker region 162. For example, the in-vehicle computing system may adjust audio gains, panning settings, and other audio settings for each speaker of audio system 102 based on the virtual location of the sound element. Further, the desired sound location may be perceived as inside or outside the vehicle cabin. As a first example, the virtual location in the virtual sound space 164 may be a location outside the vehicle. As a second example, the virtual location in the virtual sound space 164 may be inside the vehicle.

Further, in some examples, the composition of sound elements and/or the virtual spatial location of the sound element(s) may be adjusted based on vehicle characteristics such as movement, speed, location, or proximity. As an example, as a vehicle 100 drives through a scenic environment, various sound elements may be adjusted to give the impression of movement. For example, as a vehicle moves closer to a waterfall, a sound element corresponding to a waterfall may increase in volume. As another example, as the vehicle 100 moves laterally, a wildlife sound may be panned from a first side of the vehicle to a second side of the vehicle 100. By spatially mixing sound elements, a surround-sound, immersive experience may be provided to the user, which may increase user satisfaction.

Sound elements may be considered synthetic (e.g., not corresponding to a sound in the environment outside the vehicle 100) or real (e.g., corresponding to a sound in the environment outside the vehicle 100), and may be spatially mixed to be perceived as spatially located. As a non-limiting example, a first sound element may represent a birdcall, and may be played via audio system 102 in response to a vehicle location. For example, the birdcall may be a synthetic sound, and may not correspond to a specific birdcall detected outside the vehicle. The birdcall may be indexed to a virtual location 171 in a virtual sound space 164 surrounding the vehicle 100. The virtual location in the virtual sound space may be mapped to a location in the virtual speaker region 162, such as location 170. In order to spatially mix the first sound element, the first sound element may be panned to the left side speaker 117 and the left rear speaker 129. For example, the audio gain for the first sound element may be highest for the left side speaker 117 and the left rear speaker 129 and may be lower for other speakers of the vehicle 100. For example, each sound element may be perceived to originate from a spatial location due to a known relationship between audio panning and perceived spatial location, such as a surround sound technique known in the art (e.g., such as 5.1 surround sound, 7.1 surround sound, ambisonic surround sound, and the like). Further, some sound elements may be spatially mixed by upmixing one or two channels to multiple speakers.

As another non-limiting example, a second sound element may represent a real sound detected outside the vehicle. For example, a microphone 174 may be coupled to an exterior of the vehicle and may be configured to detect real sounds. In response to detecting a desirable natural sound, such as thunder, the second sound element may be played inside the vehicle to represent the natural sound. In some examples, the sound element may be a recording of the external sound captured by microphone 174, and in other examples, the sound element may be a pre-recorded or computer-generated representation of the external sound, such as a pre-recorded sound file of thunder. The thunder may be indexed to a virtual location 173 in the virtual sound space 164 surrounding the vehicle. The virtual location in the virtual sound space may be mapped to a location in the virtual speaker region 162, such as location 172. In order to spatially mix the second sound element, the second sound element may be panned primarily to the right-side speaker 119 and the right front speaker 115. For example, the audio gain for the first sound element may be highest for the right-side speaker 119 and the right front speaker 115 and may be lower for other speakers of the vehicle 100.

Some sound elements may be spatially mixed as ambient sounds. For example, a third sound element may represent rain sounds, and may be spatially mixed to be perceived as surrounding the vehicle. For example, the third sound element may be played at approximately the same volume via each speaker of vehicle 100, according to surround sound techniques known in the art.

In this way, each sound element may be perceived to originate from a spatial location due to a known relationship between audio panning and perceived spatial location, such as a surround sound technique known in the art (e.g., such as 5.1 surround sound, 7.1 surround sound, Ambisonic surround sound, and the like). Some sound elements may be real sound elements, and may correspond to sounds detected outside the vehicle (e.g., such as by microphone 174). Other sound elements may be synthetic sound elements and may not directly correspond to sounds detected outside the vehicle. Further, some sound elements may be spatially mixed by upmixing two channels to multiple speakers. For example, a sound element may have been recorded via a two-track recording device but may be upmixed to the plurality of speakers in vehicle 100 in order to be perceived as a surround sound.

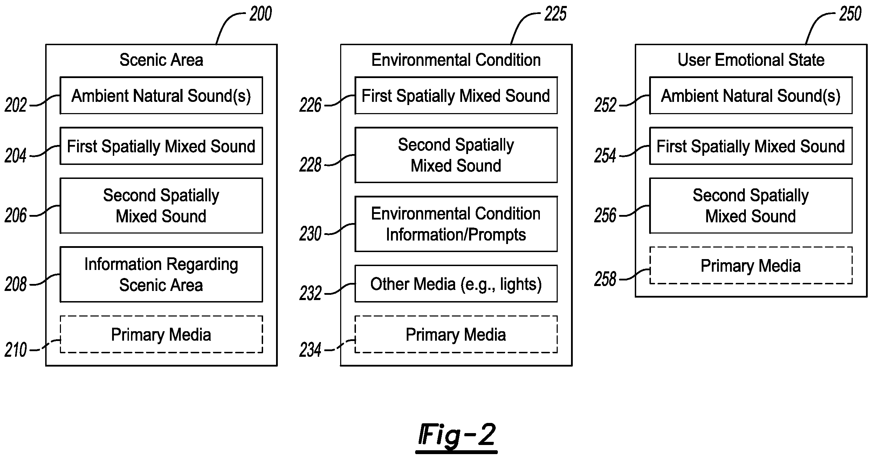

In some examples, audio system 102 may be in the automated mode of the naturescape feature and may provide sound elements based on one or more states of the vehicle 100. Turning now to FIG. 2, three vehicle states are shown, with associated audio profiles for each vehicle state. For example, the vehicle 100 may be operated by at least one user. The one or more states associated with the vehicle 100 may include, as non-limiting examples, a weather external to the vehicle 100, speed of the vehicle, an environment in which the vehicle 100 is traveling, an occupancy state of the vehicle, an emotional state (e.g., mood) of one or more occupants of the vehicle 100, and a geographic location of the vehicle 100. In particular, the vehicle controller 180 may monitor for the presence of the vehicle 100 in a scenic area 400 (e.g., such as a park, a beach, a historical location, a forest, and the like), for an environmental condition 425 (e.g., a weather-related change such as one of an approaching storm and a heat wave), and an emotional state 450 of one or more vehicle occupants (e.g., such as anxiety due to traffic).

If the vehicle 100 is determined to be in a scenic area 400, a plurality of sound elements may be provided. Specifically, based on the detected scenic area, the vehicle controller 180 may select and/or generate sound elements in order to bring the exterior environment into the vehicle 100 through an immersive sonic experience. For example, ambient natural sound(s) 202 may be played, such as ambient sounds associated with the detected scenic area, such as rain, wind, waves, and the like. Further, a plurality of spatially mixed sounds may be perceived to originate from a distinct location, such as a first spatially mixed sound 204 and a second spatially mixed sound 206. Further still, information regarding a scenic area 208 may be provided in order to enrich a user experience of the scenic area. For example, the vehicle controller 180 may access information relating to the detected scenic area and may provide the information to the user. While providing this secondary media due to the scenic area, primary media 210 may optionally continue to be played via the audio system 102. For example, the primary media 210 may be adjusted based on the secondary media.

If an environmental condition 225 is detected, a plurality of sound elements may be provided. For example, the environmental condition may be a weather-related change, and the naturescape feature may alert the user to the changing environmental conditions. For example, a plurality of spatially mixed sound elements, such as the first spatially mixed sound element 226 and the second spatially mixed sound element 228, may be provided in order to alert a user to a type of environmental change and a location of the environmental change. Further, information and/or warning regarding an environmental change 230 may be provided. In some examples, other media 232, such as lights, may be provided in order to further alert the user to the environmental change. For example, lights may reproduce the effect of lightening, or a warning light may flash to alert a user to a temperature change.

If the user emotional state 250 is detected (e.g., such as user stress or another undesirable user mood), natural sounds may be provided in order to reduce user stress and increase user enjoyment. For example, although a user may be driving through traffic, sounds of an ocean beach may be provided. For example, ambient natural sound(s) 252 (e.g., such as ocean waves) may create a baseline of a stress-relieving sound environment, and spatially mixed sounds, such as a first spatially mixed sound 254 and a second spatially mixed sound 256, may increase the verisimilitude of the sound environment by providing spatially located sound elements. Further, primary media 258 may continue to play in order to minimize disruption of the user experience. For example, the primary media 258 and the secondary media may be mixed so that the primary media 258 remains audible, while the secondary media decreases user stress by reducing the influence of a stressful external environment. Further, the audio controller 175 may adjust the secondary media based on a combination of vehicle conditions. For example, the audio controller 175 may provide secondary media based on a scenic area but may further adjust the secondary media based on an emotional state of the user. As another example, the audio controller 175 may provide secondary media based on an environmental condition but may adjust the secondary media based on the emotional state of the user.

Thus, based on a state associated with the vehicle 100, as determined by the vehicle controller 180 based on vehicle conditions and/or user inputs, the vehicle controller 180 may adjust the audio system 102 in order to provide an immersive sonic experience. Stated differently, the vehicle controller 180 may alter the sound environment in the vehicle cabin by playing sound elements corresponding to a natural environment or natural scene. Thus, in some examples, the vehicle controller 180 may increase augmentation of external environmental sounds, while in other examples the vehicle controller 180 may decrease, or even stop, augmentation of external environmental sounds. As an example, the sound elements may be calibrated to enhance a user's experience of a current vehicle location. For example, the vehicle 100 may be driving through a scenic area, such as one of a park, a forest, a beach, and a wildlife preserve. In order to enhance the user's experience of this scenic area, sound elements corresponding to the scenic area may be provided, such as ambient nature sound elements (e.g., such as wind and rain), wildlife sound elements, and the like. Further, information regarding the scenic environment may be provided. As another example, in response to an environmental change, such as an approaching storm, sound elements corresponding to the environmental change (e.g., such as pre-recorded thunder) and a warning message may be provided in order to alert the user to the environmental change. In this way, features of an environment outside the vehicle 100 may be brought in via the audio system 102, increasing user integration with the outside environment.

However, in some examples, the opposite effect may be desired, and a user may want to reduce the impact of the external environment. For example, the vehicle 100 may be in traffic, or may be located in a stressful urban environment. Such environments may increase a stress level of a user, which may decrease user satisfaction. Therefore, sound elements corresponding to a remote location may be preferred. For example, while a user is in traffic in an urban environment, sound elements corresponding to a peaceful forest may be provided, such as one or more of a gentle breeze, a waterfall, and a bird song. In this way, user stress may be reduced. In some examples, user stress may be estimated based on navigation data as provided from a navigation system in a vehicle 100. For example, when the vehicle controller 180 determines that the vehicle 100 is in heavy traffic (e.g., based on the navigation data), the vehicle controller 180 may determine that a user emotional state includes stress. Further, in some examples, a user stress level may be determined based on biometric data, such as from, for example, an infrared camera, a camera configured to detect emotional state based on facial expression, a wearable device monitoring heart rate and body temperature, and the like, and sound elements may be played in response to the user stress level exceeding a threshold user stress level.

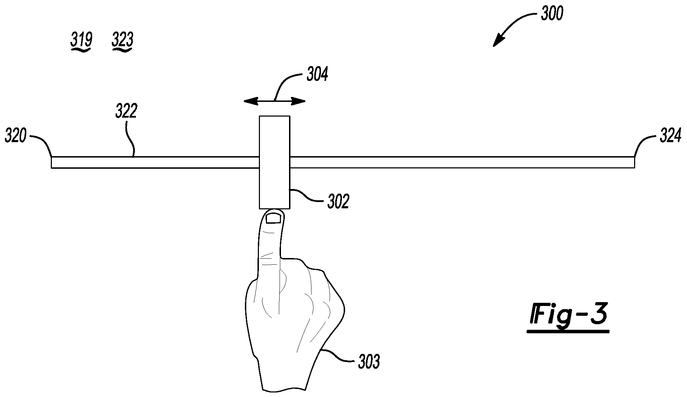

FIGS. 3-5 illustrate embodiments for the manual mode of the naturescape feature, in which sound elements corresponding to a natural environment (e.g., secondary media) are provided in response to a user input. For example, while operating in the manual mode, an activity control may be provided to a user for controlling the sound elements. For example, sound elements may be provided in response to a user input via the activity control. Turning now to FIG. 3, one example of an activity control 300 is shown. The activity control 300 may be displayed on a touch screen 319 or mobile device 323. Alternatively, activity control 300 may be realized as a three-dimensional device that is part of audio system 102 of FIG. 1. In this example, the activity control 300 takes a form of a slider control that includes a slide bar 302 and a slide bar guide 322. However, in other examples, the activity control 300 may be realized in the form of a rotary knob or other known user input device without departing from the scope or intent of the present description. A position or state of the activity control 300 may refer to a position or state of slide bar 302.

The slide bar 302 may be moved longitudinally along the length of slide bar guide 322 as indicated by arrows 304 by human user 303. The slide bar 302 may be moved to a left extent 320 or a right extent 324 to adjust sound activity that may be associated with a particular scene that may be shown via a display. For example, a user may wish to relax by listening to prerecorded sound elements of rain falling, waves crashing on a seashore, or water rushing down a creek, etc. The user may select which sound to play back over vehicle speakers and a visual representation of the sound may be displayed on a display panel. Attributes of the sound that is selected for playback over vehicle speakers may be adjusted according to a position of slide bar 302, or of an operating state of the activity control.

The slide bar 302 may be in a base position when it is moved to the left extent 320. The slide bar 302 may be fully advanced when it is moved right to the right extent 324. In one example, lowest level outputs of controlled sound elements or features may be output when slide bar 302 is positioned at the left extent 320. Greatest or highest-level outputs of controlled sound elements or features may be output when the slide bar 302 is positioned at the right extent 324.

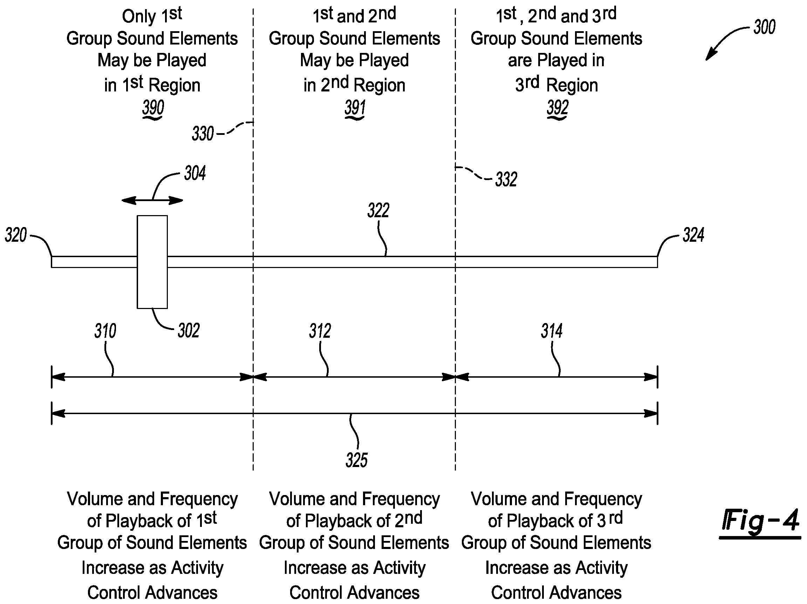

Referring now to FIG. 4, an activity control 300 that includes a plurality of control regions is shown. In this example, the activity control 300 includes three control regions; however, in other examples, the actual total number of control regions may be greater than three or less than three. Further, in this example, the control regions each comprise about one third of the length of slide bar guide 322, but the control regions may be adjusted according to other dimensions, if desired. The control range or range of authority of activity control 322 is indicated by arrow 325 and it spans the three control regions.

A first control region 390 for slide bar 302 begins at a left extent 320 of the slide bar guide 322 and ends at vertical line 330. Leader 310 shows the range of first control region 390. Slide bar 302 is shown in the first control region 390, so the audio system 102 shown in FIG. 1 may play back sound elements digitally stored in non-volatile memory that are included in a first group of sound elements that are associated with a particular theme, scene, or environment that has been selected by a user. A theme may be a mood or state of mind that is being conveyed (e.g., relax, high emotional energy, be happy, etc.). The sound elements may be played back or broadcast through the vehicle speakers. The first group of sound elements may be characterized as, for example, steady-state sound elements. Steady-state sound elements may include, but are not limited to, the sound of falling rain drops, the sound of waves crashing on a seashore, the sound of crickets softly chirping, the sound of a soft breeze, and other sound elements intended to capture the essence of a mode or the selected theme, scene, or environment, etc. Steady-state sound elements may be perceived by users as being continuous.

The position of slide bar 302 within the first control region 390 may define the volume or sound power output level of the speakers and the frequency of playback or density for the steady-state sound elements that are included in the selected scene or environment. For example, if the slide bar 302 is positioned at the left extent of slide bar guide 322, then steady-state sound elements in the selected theme, scene, or environment may be played back at a low frequency of repetition (e.g., a rain falling sound sequence retrieved from memory may repeat at a rate of 0.03 Hz) and a very low volume or sound power output level. If the slide bar 302 is moved to the right and stopped before the slide bar 302 enters the second control region 391, then the same steady-state sound elements may be played back at a higher frequency (e.g., 0.1 Hz) and a low volume or sound power level. Thus, as slide bar 302 is moved from left to right while in the first control region, the amount of sound power and frequency of playback of steady-state sound elements is increased.

A second control region 391 for the slide bar 302 begins at the vertical line 330 and it ends at vertical line 332. Leader 312 shows the range of second control region 391. In one example, when the slide bar 302 enters the second control region 391, the volume or sound power output of steady-state sound elements is maintained at its most recent level and the stead-state sound elements frequency of playback is maintained at its most recent level. The audio system 102 shown in FIG. 1 may begin to play back sound elements stored in non-volatile memory that are included in a second group of sound elements that are associated with the selected particular theme, scene, or environment. The sound elements may be played back or broadcast through the vehicle's speakers. The second group of sound elements may be characterized as dynamic sound elements. Dynamic sound elements may include but are not limited to the sound birds calling, the sound of distant thunder, the sound of owls hooting, and similar sound elements emulating the wildlife and fauna included in the selected theme, scene, or environment. Dynamic sound elements may have a perceived characteristic of not being continuous.

The position of slide bar 302 within the second control region 391 may define the volume or sound power output level of the speakers and the frequency of playback or density for the dynamic sound elements that are included in the selected theme, scene, or environment. For example, if the slide bar 302 is positioned just to the right of vertical line 330, then steady-state sound elements in the selected theme, scene, or environment may be played back at their frequency of repetition and volume or sound power output when slide bar 302 reached the position of the vertical line 330. The dynamic sound elements in the selected theme, scene, or environment may be played back at a low frequency of repletion and a low volume or sound power output when slide bar 302 is positioned just to the right of the vertical line 330.

If the slide bar 302 is moved to the right and stopped just before the slide bar 302 reaches a position of vertical line 332, then steady-state sound elements in the selected theme, scene, or environment may continue to be played back at their frequency of repetition and volume or sound power output when slide bar 302 reached the position of the vertical line 330. The dynamic sound elements in the selected theme, scene, or environment may be played back at a higher frequency of repletion and a higher volume or sound power output than when slide bar 302 is positioned just to the left of line 330.

A third control region 392 for slide bar 302 begins at the vertical line 332 and it ends at the right extent 324 of slide bar guide 322. Leader 314 shows the range of third control region 392. In one example, when slide bar 302 enters the third control region 392, the volume or sound power output of steady-state sound elements and dynamic sound elements may be maintained at their most recent levels and the stead-state and dynamic sound elements frequency of playback may be maintained at their most recent levels. The audio system 102 shown in FIG. 1 may begin to play back sound elements stored in non-volatile memory that are included in a third group of sound elements that are associated with the selected particular theme, scene, or environment. The sound elements may be played back or broadcast through the vehicle's speakers. The third group of sound elements may be characterized as surreal sound elements. Surreal sound elements may include but are not limited to the sound of coyotes howling, the sound of elk bugling, the sound of thunderclaps, and other unnatural sound elements intended to augment the user's emotional response to the selected theme, scene, or environment.

The position of slide bar 302 within the third control region 392 may define the volume or sound power output level of the speakers and the frequency of playback or density for the surreal sound elements that are included in the selected theme, scene, or environment. For example, if the slide bar 302 is positioned just to the right of line 332, then steady-state and dynamic sound elements in the selected theme, scene, or environment may be played back at their frequency of repetition and volume or sound power output when the slide bar 302 reached the position of the line 332. The surreal sound elements in the selected theme, scene, or environment may be played back at a low frequency of repletion and a low volume or sound power output when the slide bar 302 is positioned just to the right of line 332.

If the slide bar 302 is moved to the right and stopped just before the slide bar 302 reaches the right extent 324 of slide bar guide 322, then steady-state and dynamic sound elements in the selected theme, scene, or environment may continue to be played back at their frequency of repetition and volume or sound power output when the slide bar 302 reached the position of the line 332. The surreal sound elements in the selected theme, scene, or environment may be played back at a higher frequency of repletion and a higher volume or sound power output than when the slide bar 302 is positioned just to the right of the line 332.

Thus, a sole activity control may be the basis for increasing a complexity of sound elements generated via the audio system 102 shown in FIG. 1. Further, the volume and intensity of sound generated and broadcast through speakers may be adjusted via the same activity control by defining control regions for the activity control.

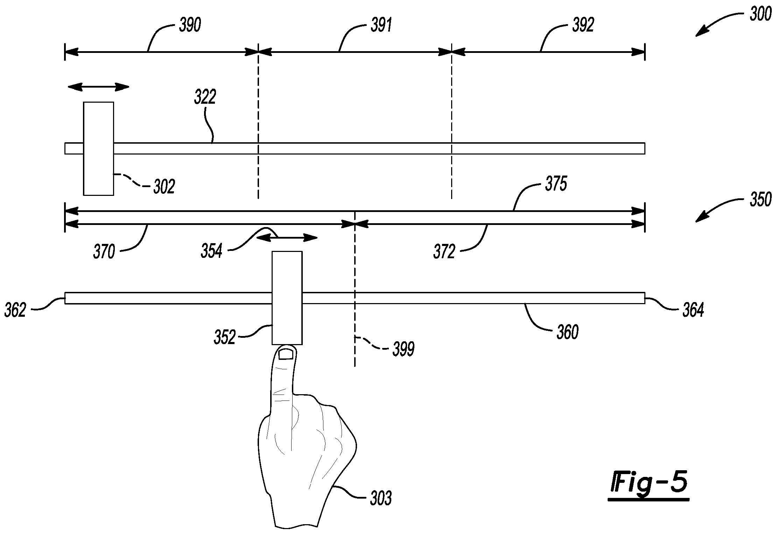

Referring now to FIG. 5, an example where two activity controls are included in the system of FIG. 1 is shown. The activity control 300 as set forth here in FIG. 5 is the same activity control that is shown in FIGS. 3 and 4. Further, the activity control 300 includes the same previously mentioned control regions 390-392. The activity control 300 also includes the same slide bar 302 and slide bar guide 322. Activity control 300 may operate and provide the functionality previously described.

The second activity control 350 includes a slide bar 352 and a slide bar guide 360. The slide bar 352 may be moved longitudinally left and right along slide bar guide 360 and between left extent 362 and right extent 364 as indicated by arrows 354 via human user 303. In this example, the second activity control 350 has a control range (or range of authority) that is subdivided into two control regions 370 and 372 (or first control region 370 and second control region 372), although range of authority 375 may be subdivided into additional control regions if desired. In one example, surround sound control parameters may be adjusted as a function of a position of slide bar 352 and the control region in which slide bar 352 is located. For example, when the slide bar 352 is positioned in the first control region 370 a center spread may be increased as the slide bar 352 is moved from the extent 362 toward the vertical line 399. Increasing the center spread may change sound distribution from a center speaker to front left and right speakers. The center spread may reach a maximum level when slide bar 352 reaches the position of vertical line 399. If slide bar moves into second control region 372, then the level of up-mixed channels may be adjusted. For example, the level of up-mixed channels may increase as the slide bar 352 moves from vertical line 399 to the right extent 364. The second activity control 350 may also adjust other surround sound control parameters such as room size emulation, delay time, and dynamic compression. Further, second activity control 350 may adjust sound control parameters for vehicle specific sound control parameters. For example, second activity control 350 may adjust delivery of sound elements to speakers to enhance sound reception for a particular passenger (e.g., front driver, front passenger, etc.).

In an example, the second activity control 350 may adjust the location of specific sound to different regions of the vehicle. For example, the second activity control 350 may adjust the sound distribution and/or location within the various vehicle zones (e.g., front left passenger, front right passenger, etc.) differently for the different sound group regions, such as steady-state sound elements, dynamic sound elements, and/or surreal sound elements. The user input controls may thus provide for adjustment of the vehicle zone to provide different control of each of the different group regions in each of the vehicle zones. In another example, the user input controls may provide for movement from one region to another of only one of the group regions, such as the steady-state sound element.

Thus, activity controls may be assigned to adjust more than one sound control parameter. Further, two or more activity controls may be provided to further increase system flexibility and user experience. In this way, a single activity control may be assigned one or more functions to reduce a number of user inputs, thereby reducing system complexity as perceived by a user.

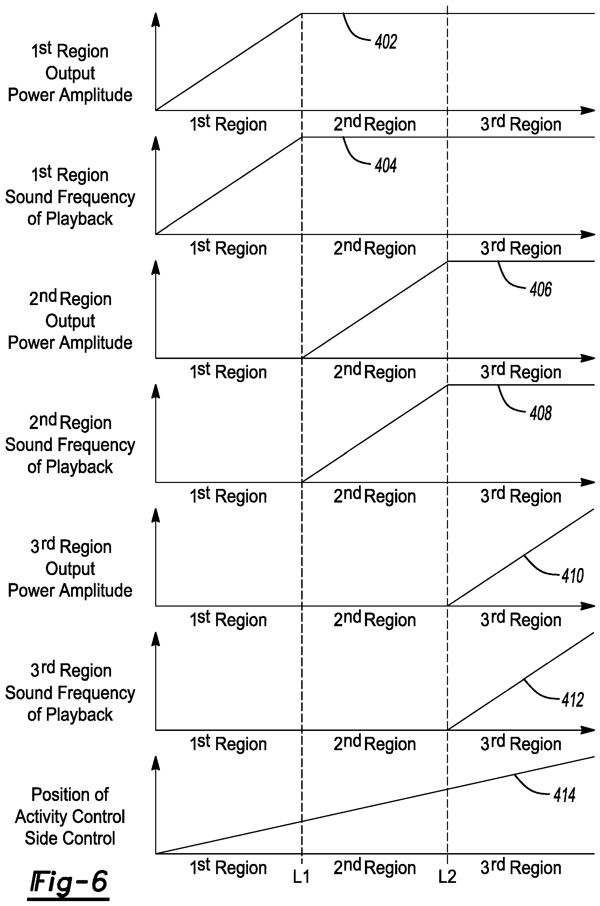

Further, FIG. 6 shows a relationship between audio attributes of sound elements and a position of an activity control other user interface while operating in the manual mode of the naturescape feature. The plots illustrate the manner in which the audio system 102 shown in FIG. 1 may adjust sound elements.

The first plot from the top of FIG. 6 is a plot of sound output power amplitude or volume versus activity control regions (e.g., 390-392). The vertical axis represents the sound output power amplitude for sound elements that are included in a first group (e.g., steady-state sound elements) of sound elements that are associated with a first control region of the activity control. The sound output power amplitude increases in the direction of the vertical axis arrow. The horizontal axis represents activity control regions and it is broken into three regions as shown in FIG. 4. Trace 402 represents the sound output power amplitude or volume for sound elements included in the first group of sound elements.

The second plot from the top of FIG. 6 is a plot of sound frequency of playback (e.g., the frequency a sound is repeated when broadcast via speakers) for sound elements that are included in the first group of sound elements versus activity control regions. The vertical axis represents the frequency of playback for sound elements that are included in a first group of sound elements that are associated with a first control region of the activity control. The horizontal axis represents activity control regions and it is broken into three regions as shown in FIG. 5B. Trace 404 represents the sound frequency of playback for sound elements included in the first group of sound elements.

The third plot from the top of FIG. 6 is a plot of sound output power amplitude or volume versus activity control regions. The vertical axis represents the sound output power amplitude for sound elements that are included in a second group (e.g., dynamic sound elements) of sound elements that are associated with a second control region of the activity control. The sound output power amplitude increases in the direction of the vertical axis arrow. The horizontal axis represents activity control regions and it is broken into three regions as shown in FIG. 5B. Trace 406 represents the sound output power amplitude or volume for sound elements included in the second group of sound elements.

The fourth plot from the top of FIG. 6 is a plot of sound frequency of playback for sound elements that are included in the second group of sound elements versus activity control regions. The vertical axis represents the frequency of playback for sound elements that are included in a second group of sound elements that are associated with a second control region of the activity control. The horizontal axis represents activity control regions and it is broken into three regions as shown in FIG. 5B. Trace 408 represents the sound frequency of playback for sound elements included in the second group of sound elements.

The fifth plot from the top of FIG. 6 is a plot of sound output power amplitude or volume versus activity control regions. The vertical axis represents the sound output power amplitude for sound elements that are included in a third group (e.g., surreal sound elements) of sound elements that are associated with a third control region of the activity control. The sound output power amplitude increases in the direction of the vertical axis arrow. The horizontal axis represents activity control regions and it is broken into three regions as shown in FIG. 5B. Trace 410 represents the sound output power amplitude or volume for sound elements included in the third group of sound elements.

The sixth plot from the top of FIG. 6 is a plot of sound frequency of playback for sound elements that are included in the third group of sound elements versus activity control regions. The vertical axis represents the frequency of playback for sound elements that are included in a third group of sound elements that are associated with a third control region of the activity control. The horizontal axis represents activity control regions and it is broken into three regions as shown in FIG. 4. Trace 412 represents the sound frequency of playback for sound elements included in the third group of sound elements.

The seventh plot from the top of FIG. 6 is a plot of activity control state or position versus activity control regions. The vertical axis represents the state or position of the activity control (e.g., slide bar 302) and the activity control moves from left to right in the direction of the vertical axis arrow. The horizontal axis represents activity control regions and it is broken into three regions as shown in FIG. 5B. Trace 414 represents the activity control state or position.

At the left most side of the plots, the activity control is positioned at a first extent (e.g., 320 of FIG. 3 and FIG. 4) of the activity control. The activity control is in the first control region so the sound output power amplitudes or volumes and the sound frequency of playback for sound elements that are included in the second and third groups of sound elements are zero. The sound output power amplitude of sound elements included in the first group of sound elements increases as the position of the activity control moves from the left side of the plot to the right side of the plot. Likewise, the frequency of playback or repetition for sound elements that are included in the first group of sound elements increases as the activity control moves from the left side of the plot to the right side of the plot. The sound output power amplitude of sound elements included in the first group of sound elements ceases increasing when the activity control reaches the position of vertical line L1. Likewise, the frequency of playback or repetition for sound elements that are included in the first group of sound elements ceases increasing when the activity control reaches the position of vertical line L1.

Continuing to move from left to right in the plots, the sound output power amplitude and the frequency of playback for sound elements included in the first group remain constant. The sound output power amplitude of sound elements included in the second group of sound elements increases as the position of the activity control moves from the position of vertical line L1 to vertical line L2. Likewise, the frequency of playback or repetition for sound elements included in the second group of sound elements increases as the activity control moves from the position of vertical line L1 to vertical line L2. The sound output power amplitude and the frequency of playback for sound elements included in the third group remain zero. The sound output power amplitude of sound elements included in the second group of sound elements ceases increasing when the activity control reaches the position of vertical line L2. Likewise, the frequency of playback or repetition for sound elements that are included in the second group of sound elements ceases increasing when the activity control reaches the position of vertical line L2.

After the sound activity control reaches the position of line L2, the sound output power amplitude and the frequency of playback for sound elements included in the first and second groups remain constant. The sound output power amplitude of sound elements included in the third group of sound elements increases as the position of the activity control moves from the position of vertical line L2 to the activity control extent (e.g., 324 of FIG. 3) or end of travel. Likewise, the frequency of playback or repetition for sound elements that are included in the third group of sound elements increase as the activity control moves from the position of vertical line L2 to the activity control extent (e.g., 324 of FIG. 3) or end of travel.

In this way, natural sounds may be provided to a user via the naturescape feature, in one of the manual mode and the automated mode. As elaborated above, the automated mode may automatically monitor vehicle conditions, such as vehicle location, environmental changes, and a user emotional state, and may provide sound elements to the user. Based on the state of the vehicle 100, the audio system 102 may provide sound elements. Some sound elements may be based on actual sounds detected outside the vehicle (e.g., real sound elements), while other sound elements may not be detected outside the vehicle (e.g., synthetic sound elements). Further, in the manual mode, a user may select a desired natural scene, and may adjust a mix of corresponding sound elements according to user preference. By providing natural sounds to a vehicle user, a more immersive sonic experience may be created, decreasing user stress and increasing customer satisfaction.

For the listening environment within the vehicle 100, aspects disclosed herein generally provide that the audio system 102 (e.g., via the vehicle controller 180) may also alter audio parameters to make the audio or user experience within the vehicle 100 sound like a different venue (e.g., stadium, concert hall (i.e., large, small, or medium), festival, or recording studio). For example, the vehicle audio apparatus may alter audio parameters to make the vehicle sound like Carnegie Hall, Yankee Stadium, etc. based on a user selection. Moreover, the vehicle audio apparatus may be arranged to simply make the listening environment within the vehicle sound larger than it really is (e.g., if the vehicle is a compact vehicle, the vehicle audio apparatus may provide for the audio experience to sound like the user is in a sports utility vehicle ("SUV")). These aspects and others will be discussed in more detail.

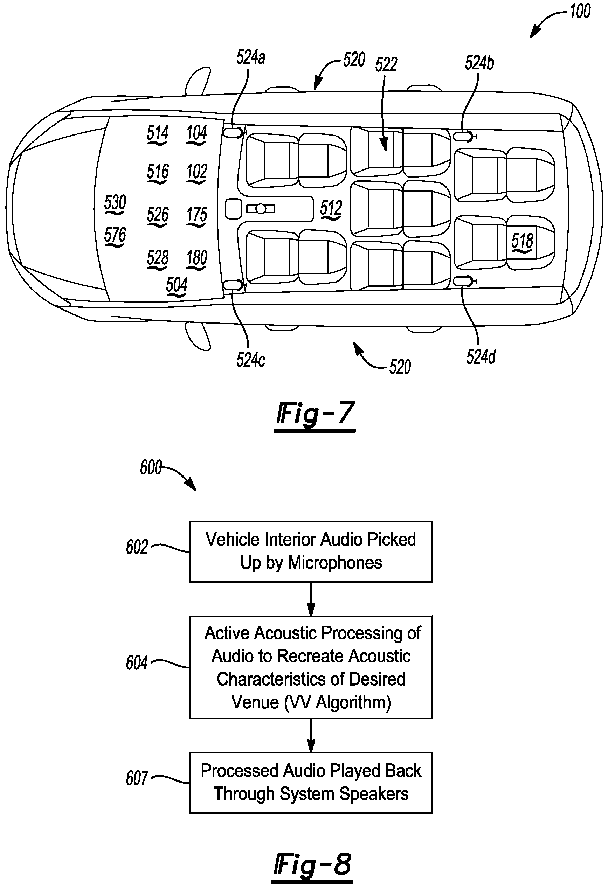

Figure 7 generally depicts an overview of the vehicle 100 and a corresponding listening environment 512 (or listening room) thereof. Similar to the vehicle 100 noted above in connection with FIG. 1, the vehicle 100 of FIG. 7 includes the audio system 102 arranged to playback audio within the listening environment 512 (or listening room) of the vehicle 100. The listening environment 512 of the vehicle 100 generally defines a front wall 516 (e.g., an area of the vehicle 100 that includes an instrument panel, a front windshield, and a floor pan including upholstery and plastic trim (if applicable) below the instrument panel), a rear wall 518 (e.g., an area of the vehicle 100 that includes a passenger row of seats, a rear trunk compartment if a SUV, and/or a rear windshield), side walls 520 (e.g., an area of the vehicle 100 that includes an A-pillar, B-pillar, C-pillar, and/or D-pillar, front and/or rear doors and windows), and a top wall 522 (or ceiling) (e.g., an area of the vehicle 100 that includes a top metal pan and a headliner).

The audio system 102 may also include a plurality of microphones 524a - 524d positioned about the interior of the vehicle 100. For example, each microphone 524a - 524d may be positioned equidistantly within the headliner (not shown) of the top wall 522 of the vehicle 100 to capture sound or a captured audio signal (e.g., music, noise captured from vehicle occupants that corresponds to entertainment data on an incoming audio signal including entertainment data from an electronic audio source (e.g., mobile device), speech (or dialogue from vehicle occupants), ambient noise from exterior of the vehicle 100 that enters into an interior of the vehicle 100, and/or ambient noise from within a vehicle cabin, etc.) within the listening environment 512 of the vehicle 100. It is recognized that any number of microphones 524 may be positioned within the listening environment 512 of the vehicle 10. However, in the event only one or two microphones 524 are positioned within the vehicle 100, audible sounds close to the microphones 524 may have a greater reverberation effect on the microphones 524 thereby causing a relatively unnatural sound.

As noted above, the audio system 102 includes the audio controller 175 that is arranged to employ any one or more noise cancellation techniques (e.g., active noise cancellation (ANC), room noise cancellation (RNC), and engine order cancellation (EOC)) to minimize the effects of road and engine noise (or any undesired audible noise in the ambient that does not coincide with the incoming audio data that is played back in the vehicle 100) that is picked up by the microphones 524a - 524d. Similarly, the embodiment illustrated in FIG. 1, the vehicle 100 includes the loudspeakers 104 positioned therein to playback the audio processed by the audio controller 175. The location of the loudspeakers 104 may be similar and/or be different than that noted in connection with FIG. 1. For example, the one or more loudspeakers 104 may be positioned in one or more of the walls 516, 518, 520, and 522 to transmit the audio into the vehicle cabin. For example, the audio controller 175 may transmit signals to the loudspeakers 104 positioned about, or in the walls (e.g., front wall 516, rear wall 518, side walls 520, and top wall 522) in the vehicle 100 to provide the desired reverberation (or reverb) based on the selected venue. The loudspeaker(s) 104 positioned within the headliner (or in the top wall 522) of the vehicle 100 may replicate the reverb of a ceiling of the selected venue, the loudspeakers(s) 104 positioned in the headrest in back row seating (or in the rear wall 518) may replicate the reverb of the rear wall of the selected venue, the loudspeaker(s) 104 positioned in the doors (or in the side walls 520) of the vehicle 100 may replicate the reverb of the side walls of the selected venue. The speaker(s) 104 positioned on or within the instrument panel (or in the front wall 516) may replicate the reverb of the front wall of the selected venue.

In general, a user (e.g., driver or passenger in the vehicle 100) may select a corresponding venue (e.g., stadium, concert hall (large, small, or medium), recording studio) for the audio controller 175 to playback audio parameters to conform the audio in the listening environment 512. It is recognized that the venues may pertain to specific venues such as Yankee stadium, Carnegie Hall, etc. A user interface 530 may be electrically coupled to the audio controller 175 to enable the user to select the corresponding venue for the audio controller 175 to playback the audio. The audio controller 175 is configured to adjust the amount of reverb that is added to an incoming audio signal from an audio source 560 (i.e., FM channel, AM channel, High Definition (HD) station, satellite radio, cell phone, tablet, etc.) and/or the captured audio signal prior to audio playback to provide the perception that the user is actually listening to the audio while situated in the selected venue setting (e.g., stadium, concert hall, recording studio, etc.) as opposed to hearing the audio based on the actual walls 516, 518, 520, and 522 (or the listening environment 512) of the vehicle 100. For example, the audio controller 175 may simulate any one or more of various walls (e.g., front, sides, rear, and top) for a corresponding virtual venue by adjusting the reverberation effect of the incoming audio and/or desired ambient sound prior to playback such that the user perceptually hears the audio in the selected venue.

The audio controller 175 may add the reverberation effect directly to the audio independent of any sound captured by the microphones 524a - 524d to achieve or generate the selected venue. In another aspect, the audio controller 175 may capture any audio data by the vehicle occupants in the vehicle such that the audio controller 175 plays back audio in the vehicle 100 based on the selected virtual venue. In addition, the audio controller 175 may add the reverberation effect to the incoming audio signal from an electronic audio source (not shown) and to the captured audio signal by the microphones 524a - 524d. These aspects may create a more realistic effect of actually being at one of the corresponding venue locations. For example, assuming that the user selected a large concert hall venue via the user interface 530, the audio controller 175 may playback the audio at a much louder volume that normal because the audio volume at a large concert hall may be much louder than the audio volume typically played back in the vehicle 100. In addition, the user may be able to select a venue corresponding to a listening environment 512 for a larger vehicle 100. The audio controller 175 may adjust the reverberation effect accordingly and playback the audio where it is perceived to be played back in a larger vehicle 100. In general, reverberation aspects related to the various venues may be recorded or measured at the venues and then stored in memory (not shown) of the audio controller 175 for selection by the user. It is also recognized that in one embodiment, the vehicle 100 may also allow the user the ability to select a particular location from within the selected venue (via the user interface 530) so that the user can experience listening to the audio not only from the selected venue but from a particular location within the venue. The location from within the venue may correspond to a main floor, an upper level (i.e., rafters), a lower level, an intermediate level (i.e., various level(s) between the upper level and the lower level), on stage, on-stage right or left, etc.

It is further recognized that any incoming audio that is captured by the microphones 524a - 524d may be muted by the audio controller 175 when: (i) any windows in the vehicle 100 are open, (ii) a sunroof in the vehicle 100 is open, or (iii) a convertible top in the vehicle 10 is down. For example, various electronic controllers (not shown) in the vehicle 10 may monitor vehicle status such as window status (e.g., open or closed for any window), sunroof status (e.g., open or closed), and convertible top status (e.g., up or down) and transmit information to the audio controller 175 over a data communication bus via a controller area network (CAN) or other multiplexed data bus. A mixer 576 may mute the captured audio at the microphones 524 and apply the reverberation effect to the incoming audio signal to generate the audio for playback in the venue selected by the user via the user interface 530. For example, if a window is detected to be down or a convertible top is detected to be down, then the mixer 576 may mute the captured audio as the captured audio may be too loud or noisy.

Figure 8 generally depicts a method 600 for generating virtual venues within the listening environment 512 of the vehicle 100 in accordance with one embodiment.

In operation 602, the audio controller 175 receives captured audio from any one or more of the microphones 524 positioned within the vehicle 100.

In operation 604, the audio controller 175 processes the incoming audio from the audio source 560 to recreate acoustic characteristics of the desired or selected venue. For example, the audio controller 175 adds the corresponding reverberation effect to generate the desired virtual venue as selected by the user.

In operation 607, the audio controller 175 plays back the processed audio at the corresponding reverberation effect through the various loudspeakers 104 to enable the user to listen to the audio based on the acoustics of the selected venue.

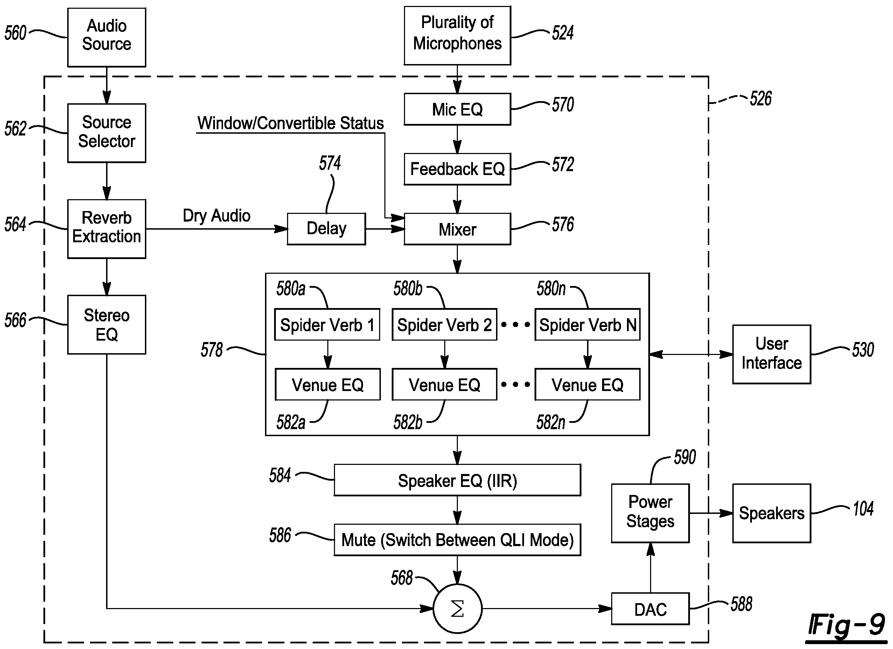

Figure 9 depicts a detailed implementation of the audio controller 175 that generates virtual venues within the listening environment 512 of the vehicle 100 in accordance with one embodiment. It is recognized that the audio controller 175 may include any number of processors and memory that co-act with one another to execute any of the noted operations disclosed herein. An audio source 560 is configured to provide an incoming audio signal to the vehicle 100 (or to the audio controller 175). It is recognized that the audio source 560 may be any one of an FM station, an AM station, a High Definition (HD) audio station, a satellite radio provider, an input from cell phone, an input from a tablet, etc. The user may select the corresponding audio source 560 via a source selector 562 positioned on the audio controller 175 or via the user interface 530 which may be positioned elsewhere on the vehicle 100 or on a mobile device (not shown).

A reverb extraction block 564 (or extraction block 564) removes reverb from the incoming audio signal to provide a dry audio signal. This operation is performed to prepare the incoming audio signal to receive the corresponding reverberation effect for the selected venue. It is recognized that the reverb extraction block 564 may not be capable of completely removing the reverb from the incoming audio signal and that some remnants of reverb may still be present on the dry audio signal. A stereo equalization block 566 receives the dry audio signal from the reverb extraction block 564. In general, the stereo equalization block 566 serves as a regular stereo equalizer in the vehicle 100 and is configured to equalize the incoming audio signal for user playback. An adder 568 receives an output from the stereo equalization block 66. The relevance of the adder 568 will be discussed in more detail below.

The audio controller 175 is configured to receive an input from each corresponding microphone 524 in the vehicle 100. As noted above, the audio captured by the microphones 524 may correspond to music, speech, and ambient noise within the vehicle 100. A microphone equalization block 570 receives the captured audio from the microphones 524 and equalizes (*i.e.,* boosts or weakens the energy of various frequency bands) the captured audio. A feedback equalization block 572 receives an output from the microphone equalization block 570. The audio controller 175 includes a delay block 574, the mixer 576, and a spider reverb block 578. The delay block 574 receives the dry audio from the reverb extraction block 564 to time align the dry audio with the captured audio from the microphones 524. This condition accounts for the delay of processing the incoming audio signal by the audio controller 175. It is desirable to ensure that the playback of the entertainment data on the incoming audio signal is time aligned with the captured audio signal from the microphones 524. Consider the example in which vehicle occupants are clapping or singing along with the entertainment data of the incoming audio signal, in this case it is desirable to time align the playback of the entertainment data on the incoming audio signal with the clapping or vocal inputs from the vehicle occupants (as captured by the microphones 24) for playback. By capturing the playback of the entertainment data of the incoming audio signal and the clapping or vocal inputs (or other actions performed by the vehicle occupant(s) that coincide with entertainment data) by the microphones 524, this aspect further provides the experience to the vehicle occupant(s) that he/she is located within the desired venue as one would expect to hear to some extent noise that coincides with the audio playback at a venue that includes an audience. Thus, by capturing the ambient noise in the vehicle 100 with the microphones 524 and combining this data with the entertainment data of the incoming audio signal and subsequently adjusting the reverb of the mix, this aspect enhances the experience for the vehicle occupant and provides the perception that the vehicle occupant is positioned within the desired venue.

It is recognized that the delay block 574 may or may not apply a delay and that this condition is based on the processing speed of audio controller 175. The mixer 576 is configured to mix the reverb from the audio captured by the microphones 524 with any remnants of reverb that are left on the on the incoming audio signal. The mixer 576 receives a signal WINDOW/CONVERTIBLE_STATUS that indicates whether the window, convertible top, or sunroof is open or closed. Again, the mixer 576 may mute the captured signal from the microphones 524 if the window, convertible top, or sunroof is open and too much noise is on the signal. Likewise, the mixer 576 controls how much noise or voice data (*i.e.,* captured audio data from the plurality of microphones 24) in the vehicle 100 is fed back to the spider verb block 578 versus how much audio is fed into the spider verb block 578. In general, the mixer 576 determines the blend of audio captured at the microphone 524 in relation to direct audio (or the dry audio) in order to achieve a desired blend.

The user interface 530 provides a control signal to the audio controller 175 that indicates a selected venue (or virtual venue) for the audio controller 175 to playback the audio. As noted above, the selected venue may correspond to any one of a stadium, a concert hall (e.g., large, small, or medium), recording studio)), and a listening environment of a vehicle 100 that is different from the listening environment 512 of the vehicle 100 that the user is positioned in. The spider reverb block 578 receives an output from the mixer 576 that corresponds to the mixed dry audio and the captured audio. The spider reverb block 578 generally includes a plurality of spider verb blocks 580a - 580n (or "580") and a plurality of venue equalization blocks 582a - 582n (or "582"). In general, each spider verb block 580 and its corresponding venue equalization block 582 adds or adjusts the amount of reverb on the output from the mixer 576 to provide the selected or desired venue for the user. Specifically, the spider reverb block 580 replicates different reverberation characteristics of the different walls for the selected venues. The spider reverb block 578 adjusts the reverberation to correspond to a designated or selected venue and the venue equalization block 582 controls the brightness characteristics for the walls 516, 518, 520 and 522 of the vehicle 100 to provide the desired brightness characteristics for the selected venue. The selected venue may correspond to a stadium venue, a large concert hall, a medium concert hall, and so on. For example, in the event the user selected that the audio controller 175 playback the audio as if the user was positioned in Carnegie Hall, the spider verb block 580 is configured to provide reverberation effect off the walls 516, 518, 520 and 522 of the vehicle 100 to sound like the walls of Carnegie Hall. Thus, this gives the user the perception that he/she is actually listening to audio in Carnegie Hall while actually sitting in the vehicle 10. The audio controller 175 includes memory (not shown) that may store any number of desired venues and that also takes into account the various front, side, rear, and top walls of the selected venues and the manner in which the audio reflects or echoes off such surfaces of the walls. For example, the memory may store various pre-set frequency values that correspond to a characteristic of the walls for particular venue and the venue equalization block 582 may boost or decrease frequency levels of the audio output from the mixer 576 and the spider verb block 580 to further increase the perception that the user is actually located in the corresponding or selected venue.

For example, consider the scenario in which the selected venue generally provides a short ceiling that is made of metal and far away walls that have carpet on them. The ceiling may have very bright and fast reflection characteristics in comparison to the other wall that would sound very dull and have slower reflection times. The spider reverb block 578 adjusts the reverberation of the incoming audio signal and the captured audio signal to provide the desired venue and the corresponding venue equalization block 582 controls the equalization of the incoming audio signal and the captured audio signal to simulate playback in the desired venue and to simulate the brightness characteristics of walls of the desired venue. In general, the loudspeakers 104 in the vehicle 100 globally provide an output that corresponds to a desired venue and corresponding speaker(s) in a given wall may each receive a discrete input to simulate the desired brightness characteristic for that given wall of the desired venue. For example, the loudspeakers 104 in the ceiling of the vehicle 100 may receive an equalized output to provide the appearance that the sound that bounces off of the ceiling has a fast reflection time to coincide with the short ceiling of the selected venue as noted above. Likewise, the equalization may be adjusted differently for each audio output provided to a corresponding loudspeaker 104 in a particular wall 516, 518, 520, and 522 to coincide with various walls in the selected venue.

A speaker equalization block 584 receives an output from the spider verb block 578 to provide a more even audio response in the vehicle 100. The speaker equalization block 584 compensates for issues with the loudspeakers 104 in the vehicle 100. A mute block 586 is provided to simply remove the amount of reverb added by the spider verb block 578 if the user elects to hear the incoming audio in a normal mode. The user interface 530 may transmit a signal indicative of a request to the audio controller 175 to disable the reverberation effect that is added to obtain the selected venue. In response to the request, the audio controller 175 may activate the mute block 86 to simply disable the playback of the audio in the selected venue. The adder 568 receives the output from the spider reverb block 578 (or from the mute block 586) and also receives the output from the stereo equalization block 566 and sums the two audio inputs together to provide a digital version of the inputs. A digital to analog converter (DAC) 588 receives the digital output from the adder 568 and converts the digital output into an analog output. The analog output corresponds to the audio that is to be played back for the user at the selected venue. Various power stages (or power amplifiers) 590 boost the analog output for playback at the loudspeakers 104.

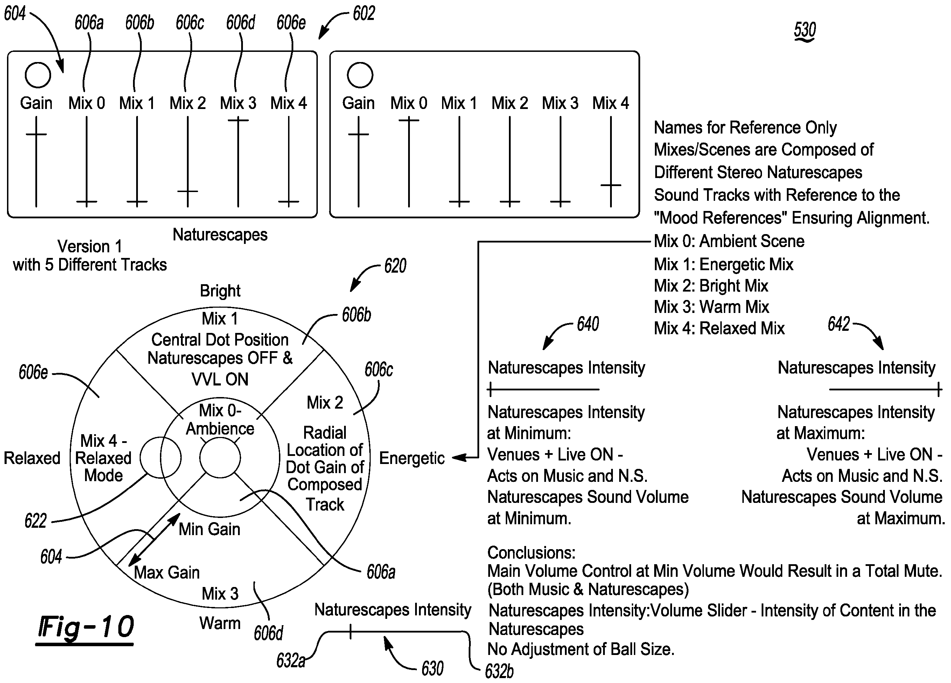

In view of the foregoing present disclosure, it is possible to enable users (or vehicle occupants) in the vehicle 100 to ability to select a corresponding naturescape audio format (e.g., audio that is typically heard in a forest, stream, canyon, etc.) such that the audio system 102 plays back the sounds from that nature setting and in the venue that corresponds to the naturescape setting such as for example, forest, stream, canyon, beach, etc. Thus, in this regard, the audio (e.g., music and/or voice played back in the vehicle 100 may generally sound as if it is actually in the nature setting. For example, the user may select via the user interface 530 to listen to sounds from a beach in which the audio controller 175 plays back sounds generally heard at a beach (e.g., waves crashing on the shore, seagulls, other ambient noise generally heard at the beach, etc.) and adjust the venue via the virtual venue feature so that the corresponding audio that is being played back sounds as if the waves crashing on the shore, seagulls are in a beach setting, and other ambient noise generally heard at the beach. These aspects and others will be discussed in more detail below.FIG. 10 illustrates one example of the user interface 530 for controlling aspects related to naturescapes and virtual venues features in accordance with one embodiment. In one example, the user interface 530 may provide for a slider bar control 602 for controlling the naturescapes audio and corresponding virtual venues as provided by the audio system 102. For example, the slider bar control 602 generally includes a gain selection 604 and corresponding mix levels 606a - 606e (or "606"). The gain selection 604 generally enables the user to ability to adjust the overall gain of the selected mix levels 606a- 606e. Each mix level 606 generally defines a setting for a corresponding naturescape. For example, the various mix levels 606 correspond to mixes/scenes that are composed of different naturescape soundtracks with reference to "mood references" to ensure alignment. In other words, the selected mix levels 606a - 606e may provide energetic of bright sounds that may include, for example, bird sounds, or higher pitched and higher beats per minute (bpm), and warm or relaxed sounds that may, for example, be associated with a fireplace or other similar calming thing or aspect (e.g., a lower bpm).

For example, mix level 606a generally corresponds to an ambient scene, mix level 606b generally corresponds to an energetic mix, mix level 606c generally corresponds to bright mix, mix level 606d generally corresponds to a warm mix, and 606e generally corresponds to a relaxed mix. The slider bar control 604 is generally similar to the slider bar control 602 however, the slider bar control 604 simply illustrates different levels that may be selected for each mix level. FIGURE 10 generally illustrates that one or more of the various mix levels 606a - 606e may be activated at any time. For example, mix levels 606c (e.g., bright) and 606e (e.g., relaxed) may both be activated which may involve for example, wave sounds being mixed with sounds corresponding to sea gulls. Mix levels 606d (e.g., warm) and 606e (e.g., relaxed) may both be activated to which may involve for example, sounds related to rain and a fireplace.

First selection control 620 is also shown in FIG. 10 and may be used as an alternate to the slider bar control 602 to select the gain selection 604 and mix levels 606a - 606e. As shown, the first selection control 620 may be circular where the mix levels 606a - 606e are formed as corresponding sections of the first selection control 620 that form the circular shape. The first selection control 620 may also include a corresponding mix level 606a that is placed at a center point thereof. A selection device 622 that may also be, for example, circular may be moved over a corresponding mix level 606a - 606e to enable the occupant the ability to select one or more of the mix levels 606a - 606e. With the first selection control 620, the occupant may simply move the selection device 622 over one or more of the mix levels 606a - 606e to select the corresponding mix level. As shown, the selection device 622, is placed, for example on a boundary formed by the mix level 606a and 606e to select both mix levels 606a and 606e. In one example, the center point of the first selection control 620 may correspond to a true virtual venue and the placement of the first selection device 622 outwardly from the center point increases the sound for the corresponding mix level 606a - 606e. For example, the placement of the selection device 622 relative to the center point or to an outer perimeter of the first selection control 620 dictates the gain level that is applied to the corresponding mix level 606a - 606e. In addition, an intensity slider bar 630 is also provided to enable the occupant to ability to select the amount of intensity applied to the selected mix level 606a - 606e. For example, the intensity slide bar 630 includes a first end point 632a and a second end point 632b which form extremities or limits for the amount of intensity that is application to the selected mix level. Thus, the occupant may move selector 634 anywhere between or at the first end point 632a of the second end point 632b. Positioning the selector 634 closer to the first end point 632a generally represents a desire by the user to utilize less intensity on the selected mix 606a - 606e. Positioning the selector 634 closer to the second end point 632b generally represents a desire by the user to utilize more intensity on the selected mix 606a - 606e. The gain generally corresponds to a ratio between audio that is being played back by the vehicle (e.g., audio from a recording artist or other non-naturescape audio, etc.) and the naturescape sounds, whereas the mix corresponds to a ratio between the audio tracks that comprise the naturescape audio.

As generally shown at 640, this condition represents the occupant's desire to use a minimum intensity level of the selected naturescape (or mix level 606a - 606e). For example, at 604, this condition corresponds to a minimum intensity level that is applied to the naturescape and/or the other audio being played by in the vehicle ((e.g., recording of artist's audio or audio being played back by a broadcast (i.e., non-naturescape audio)). For example, this condition may involve that the intensity of the selected naturescape to be at a minimum and that the virtual venues being applied by the audio system 102 along with the audio being played back by the audio system 102 also being at a minimum. As generally shown at 642, this condition represents the occupant's desire to use a maximum intensity level of the selected naturescape (or mix level 606a - 606e). For example, this condition may involve that the intensity of the selected naturescape to be at a maximum and that the virtual venues being applied by the audio system 102 along with the audio (e.g., recording of artist's audio or audio being played back by a broadcast (i.e., non-naturescape audio) being played back by the audio system 102 also being at a maximum.

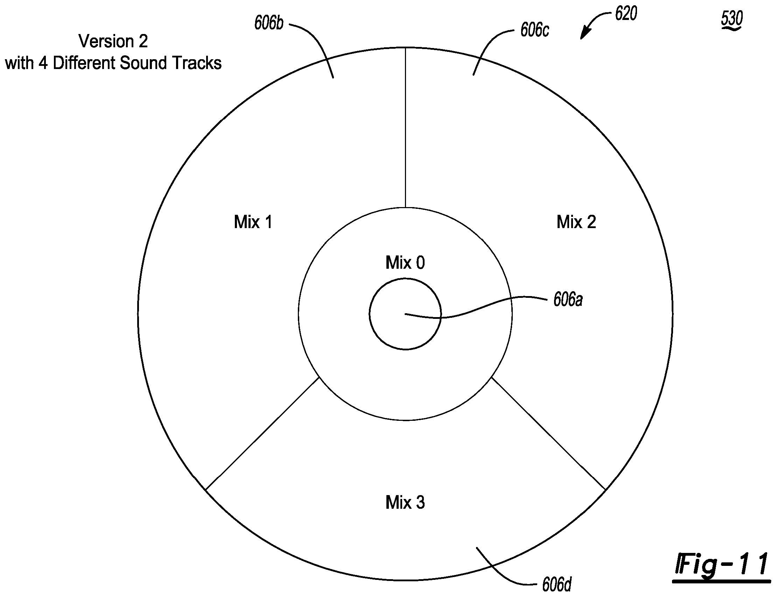

FIG. 11 illustrates another example of the first selection control 620 as displayed on the user interface 530 in accordance with another embodiment. The first selection control 620 as shown in FIG. 11 includes a different number of mix levels 606a - 606d. It is recognized that the number of mix levels 606 for the first selection control 620 may vary based on a desired criterion of a particular implementation.

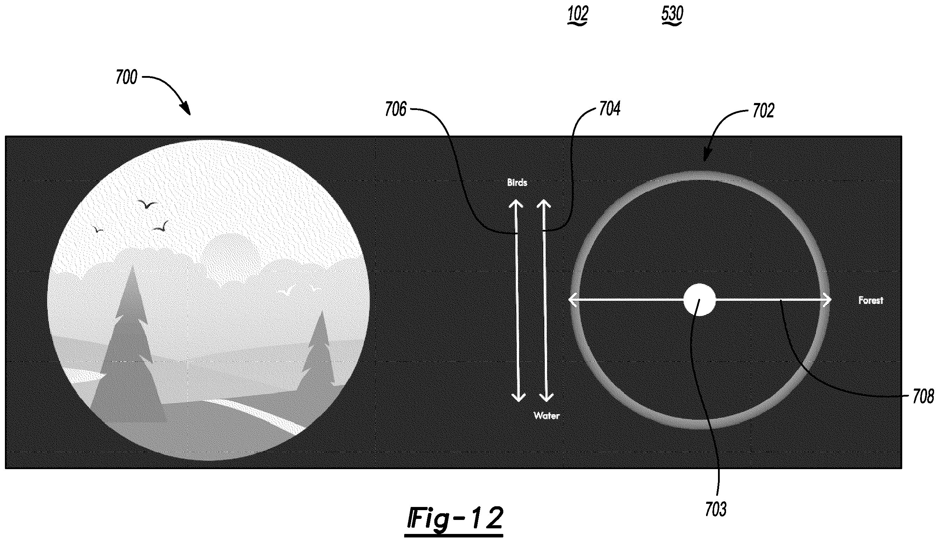

FIG. 12 illustrates a second selection control 700 as displayed on the user interface 530 in accordance with one embodiment. In general, the user interface 530 may display the selection control 700 which corresponds generally to a virtual venue of a forest. In this case, the occupant may select the virtual venue for the forest via another selection control mechanism prior to seeing the second selection control 700. Further, the virtual venue for the forest and its associated selection control 700 illustrates various naturescapes associated with the forest such as birds, water, etc. that may be played back by the audio system 102. The second selection control 700 may increase/decrease level or volume of the audio playback of the naturescapes in response to occupant selection of the second selection control 700.

For example, the occupant may simply move their respective finger along the image of the forest (e.g., virtual venue) as shown in the second selection control 700 to control the audio playback for the secondary images (or naturescape images/audio ((e.g., birds, water, etc.)) shown in the forest. For example, a sphere is generally shown at 702 and a touch point 703 is also generally shown which corresponds to a point in the second selection control 700 as to where the occupant's finger is positioned on the image shown in the second selection control 700. The sphere 702 generally illustrates an area in which the occupant can move the touch point 703 to select various aspects related to naturescapes (or images of nature in the forest) by an occupant. It is recognized that the actual touch point 703 will not be visible to the occupant for selection and subsequent control of movement. In one example, the touch point 703 may be overlaid on the image shown in the second selection control 700. While the touch point 703 is generally shown circular, it is recognized that the touch point 703 may be arranged in any shape or configuration.

In general, the occupant can move the touch point 703 vertically, downward along an axis 704 toward the water to control the audio controller 175 to increase the level/volume of the water playback. In the event the occupant intends to reduce the volume or level of the playback of the water, the occupant may move the touch point 703, vertically, upward along the axis 704 away from the image of the water as shown in the second selection control 700. In addition, the occupant can move their respective finger vertically, upward along an axis 706 toward the birds to control the audio controller 175 to increase the level/volume of the bird naturescape playback (e.g., birds chirping). In the event the occupant intends to reduce the volume or level of the playback of the bird chirping, the occupant may move the touch point 703, vertically, downward along the axis 706 away from the image of the birds as shown in the second selection control 700. Similarly, the user interface 530, via the second selection control 700, enables the user to move the touch point 703 about the visual depicting the forest (or virtual venue) by moving the touch point horizontally across the axis 708. In this regard, the occupant may traverse through the forest and move closer to other items shown in the forest scene or image for the occupant to select as a naturescape for the audio system 102 to playback for the user. In one example, the occupant may touch the image of the forest and move the touch point 703 along the axis 708 to the right to move closes to the water as illustrated on the left hand side of the second selection control 700. It is recognized that the touch point 703 is generally visible in the image shown of the forest on the second selection control 700. For example, the touch point 703 may be overlayed with the image presented in connection with the second selection control 700. The touch point 703 may be visible to the user at all times except for moments in which the system enters into a time-out screen with a large image of the selected naturescape. When the user moves the touch point 703, the touch point 703 will remain in the spot where the user has left it. The audio will change based on the spot where the touch point 703 is moved to.

In another embodiment, the touch point 703 may not have any nature sounds (or naturescapes), however, in case, the corresponding visuals may illustrate the location, and dragging your finger towards the area where the birds sounds (or naturescapes) are located, birds will appear. Alternatively, the touch point 703 may be re-centered after the occupant removes his/her finger from the second selection control 700.

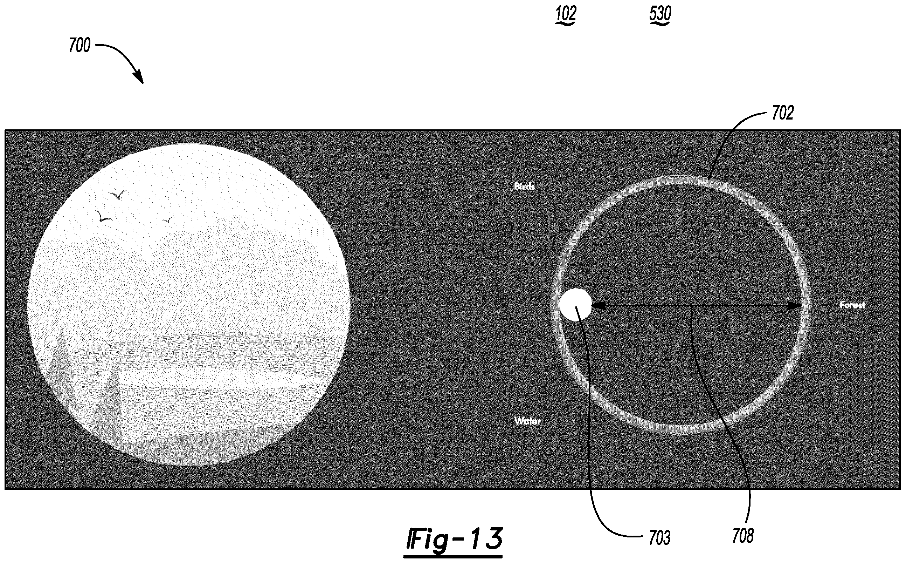

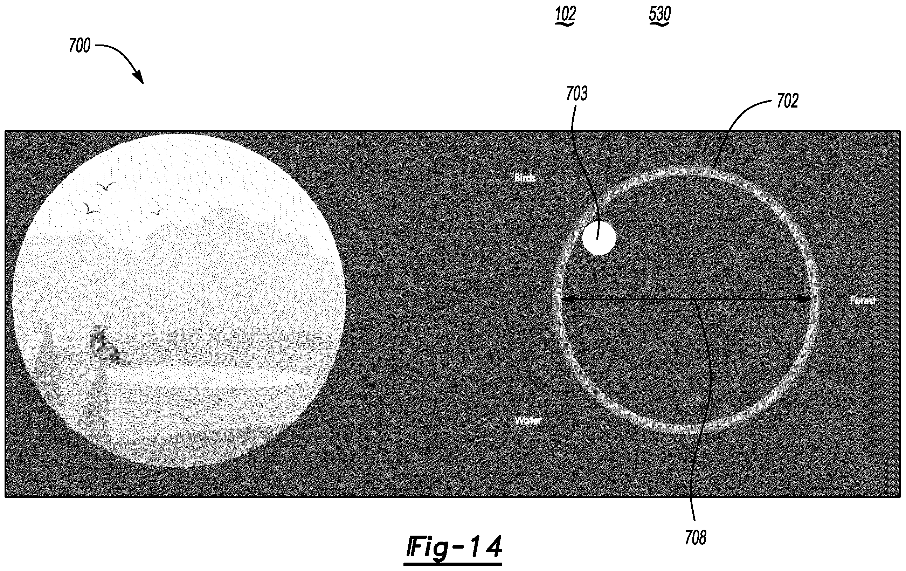

FIG. 13 illustrates another aspect of the second selection control 700 as displayed on the user interface 530 in accordance with one embodiment. As noted above, the occupant may traverse the image of the forest as illustrated in the second selection control 700 along the axis 708 with the touch point 703. The second selection control 700 as illustrated in FIG 14 illustrates the example in which the occupant touches the image of the forest and moves the touch point 703 along the axis 708 to the left to move closer to the water as illustrated on the left hand side of the second selection control 700. With this selection, the audio system 102 may playback audio related to the naturescape of water in the vehicle 100 at a higher level or volume in response to detecting that the occupant has moved the touch point 703 closer to the image of the water in the forest.

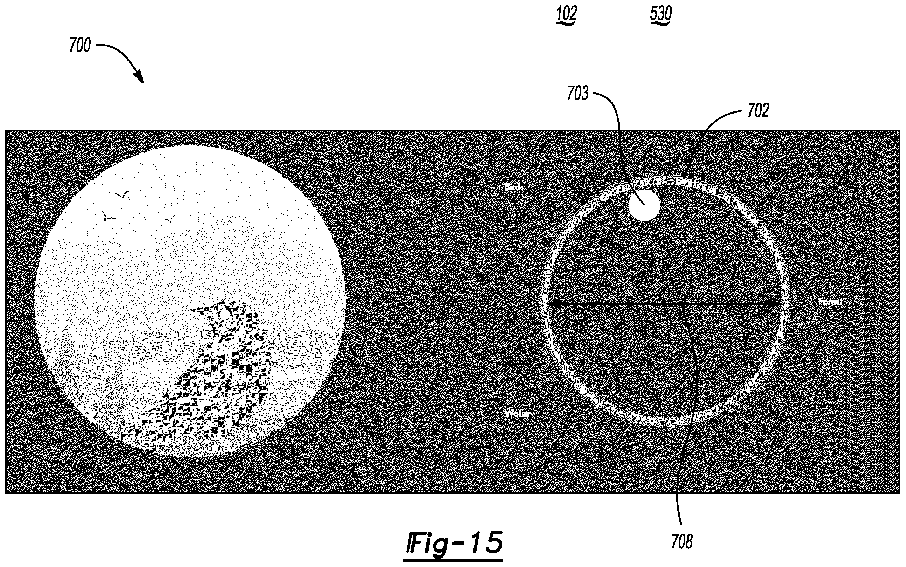

FIG. 14 illustrates another aspect of the second selection control 700 as displayed on the user interface 530 in accordance with one another embodiment. For example, the occupant may move the touch point 703 close to the birds in the image shown in the second selection control 700 (e.g., compared to the image as referenced in the second selection control 700 as illustrated in FIG. 13) to increase the level or volume in which the audio system 102 plays back audio for the bird as a naturescape. It is recognized that with the example illustrated in FIG. 15, the audio system 102 may play back audio for the water and the bird equally in the vehicle 100.

FIG. 15 illustrates another aspect of the second selection control 700 as displayed on the user interface 530 in accordance with one another embodiment. For example, the occupant may move the touch point 703 even closer to the birds in the image shown in the second selection control 700 (e.g., compared to the image as referenced in the second selection control 700 as illustrated in FIG. 14) to increase the level or volume in which the audio system 102 plays back audio for the bird as a naturescape. It is recognized that with the example illustrated in FIG. 14, the audio system 102 may play back audio for bird louder than that of the water in the vehicle 100. It is also recognized that the size of the image of the bird is larger than that shown in the previous images on the second selection control 700 which is indicative of the audio system 102 increasing the gain or volume of the naturescape associated with the bird. Thus, the audio playback of the birds may be much louder (or pronounced) in comparison to the audio playback of the birds in FIG. 14.

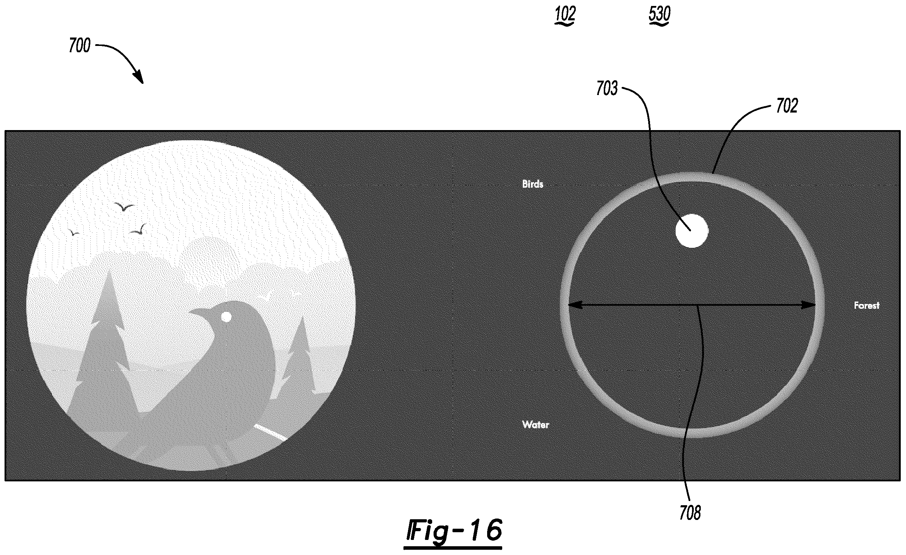

FIG. 16 illustrates another aspect of the second selection control 700 as displayed on the user interface 530 in accordance with one another embodiment. For example, the occupant may move the touch point 703 closer to the forest while remaining close to the bird in the image shown in the second selection control 700 (e.g., compared to the image as referenced in the second selection control 700 as illustrated in FIG. 15) to increase the level or volume in which the audio system 102 plays back audio for the trees in the forest as a naturescape. It is recognized that with the example illustrated in FIG. 14, the audio system 102 may play back audio for bird and the trees in the forest equally to one another. In this case, since the water is not present in the image of the second selection control 700, the audio system 102 refrains from playing back any audio related to the water since the occupant does not wish to hear the audio related to the water.

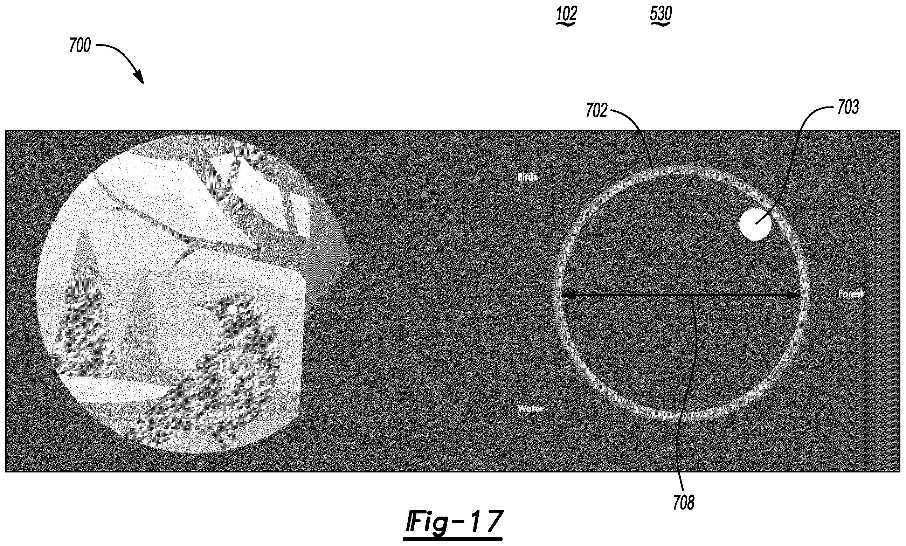

FIG. 17 illustrates another aspect of the second selection control 700 as displayed on the user interface 530 in accordance with one another embodiment. For example, the occupant may place the touch point 703 even closer to the trees in the forest while remaining on the birds and also on the water in the image shown in the second selection control 700 (e.g., compared to the image as referenced in the second selection control 700 as illustrated in FIG. 16) to increase the level or volume in which the audio system 102 plays back audio for the trees while also playing audio for the bird and water. It is recognized that with the example illustrated in FIG. 14, the audio system 102 may play back audio for the trees, water, and the birds equally in the vehicle 100. It is also recognized that the size of the image of the birds, water, and trees are similar to one another in comparison to the previous images on the second selection control 700 which is indicative of the audio system 102 playing back the audio for the birds, trees and water equally based on the occupant's placement of the touch point in the sphere 702. Thus, the audio playback of the birds may be much louder (or pronounced) in comparison to the audio playback of the birds in FIG. 14.

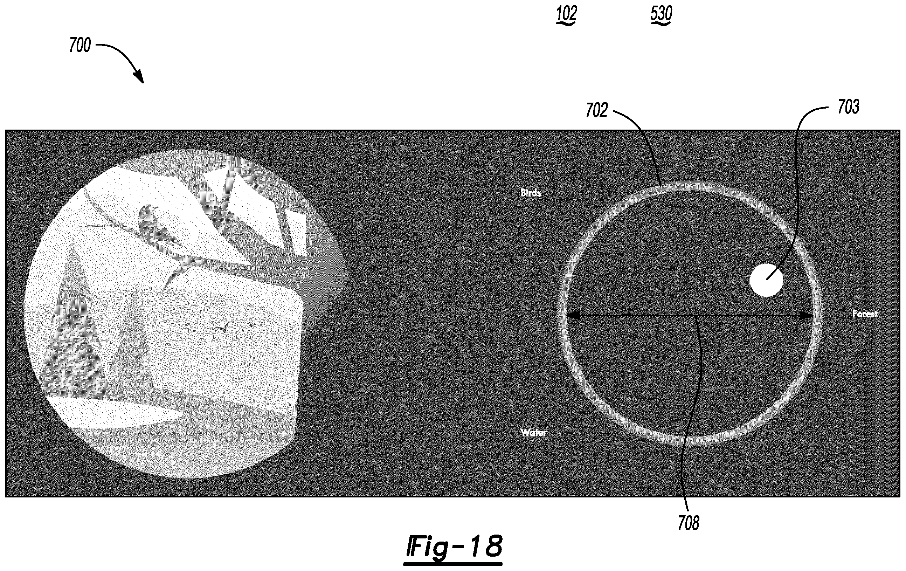

FIG. 18 illustrates another aspect of the second selection control 700 as displayed on the user interface 530 in accordance with one another embodiment. For example, the occupant may place the touch point 703 even closer to the trees in the forest while being positioned further away from the birds and slightly closer to the water in the image shown in the second selection control 700 (e.g., when compared to the image as referenced in the second selection control 700 as illustrated in FIG. 17) to continue to play the birds and water at the same level in FIG. 18 while decreasing the level or volume in which the audio system 102 plays back audio for the birds.

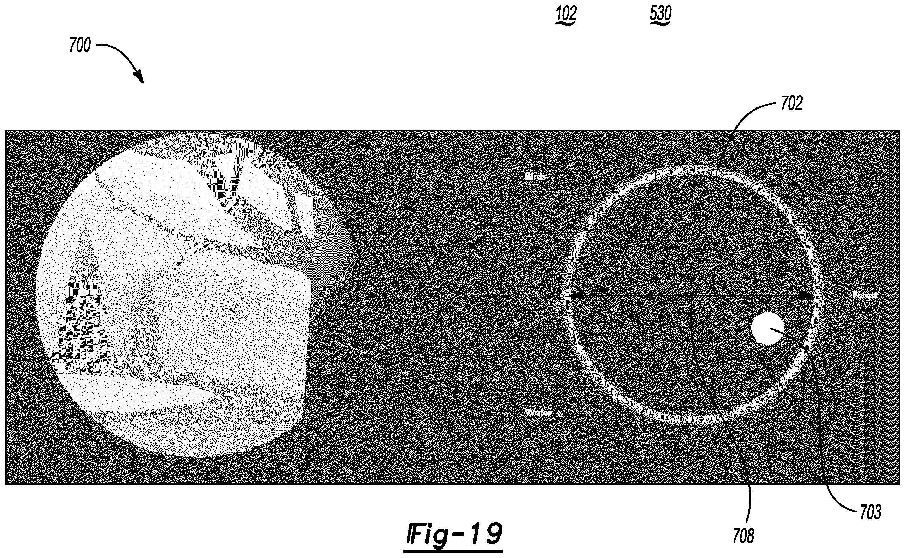

FIG. 19 illustrates another aspect of the second selection control 700 as displayed on the user interface 530 in accordance with one another embodiment. For example, the occupant may place the touch point 703 even closer to the water, while remaining close to the trees in the forest and further away from the birds in the image shown in the second selection control 700 (e.g., when compared to the image as referenced in the second selection control 700 as illustrated in FIG. 18) to continue to play the water and the trees at the same level in FIG. 18 while further decreasing the level or volume in which the audio system 102 plays back audio for the birds.

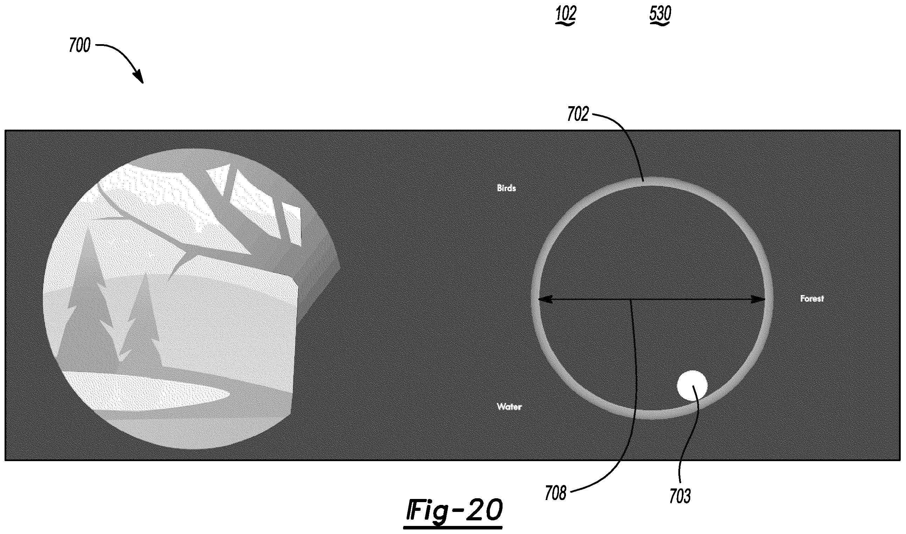

FIG. 20 illustrates another aspect of the second selection control 700 as displayed on the user interface 530 in accordance with one another embodiment. For example, the occupant may place the touch point 703 even closer to the water, while remaining close to the trees in the forest and further away from the birds in the image shown in the second selection control 700 (e.g., when compared to the image as referenced in the second selection control 700 as illustrated in FIG. 19) to continue to play the water and the trees at the same level in FIG. 19 while no longer playing back the audio for the birds as notice that the birds are no longer shown in the image of the second selection control 700.

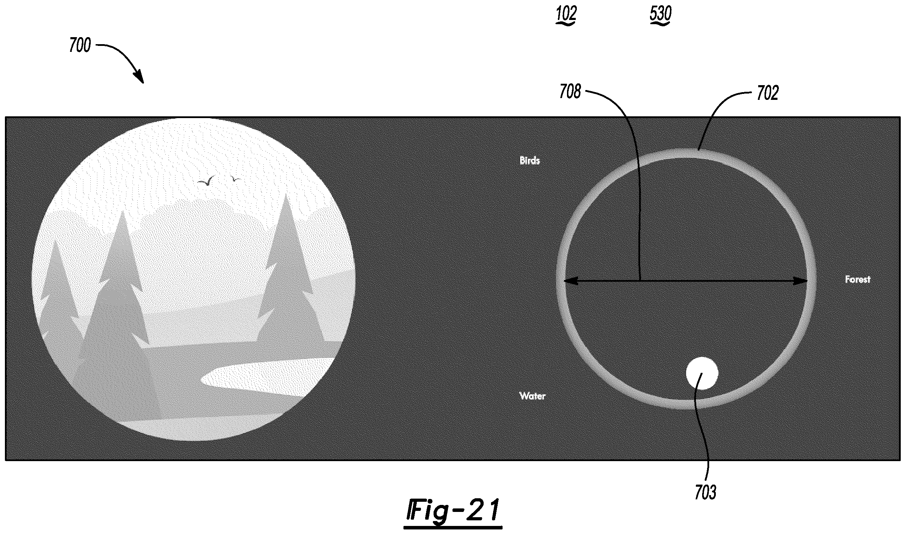

FIG. 21 illustrates another aspect of the second selection control 700 as displayed on the user interface 530 in accordance with one another embodiment. For example, the occupant may place the touch point 703 even closer to the water, while remaining close to the trees in the forest and further away from the birds in the image shown in the second selection control 700 (e.g., when compared to the image as referenced in the second selection control 700 as illustrated in FIG. 19) to continue to play the water and the trees at the same level in FIG. 18 while also playing back the audio for the birds as notice that the birds are minimally shown in the image of the second selection control 700. The difference between what is shown in FIGURE 20 relative to what is shown in FIG. 21 is that the touch point 703 is positioned closer to the water. Thus, the audio system 102 may play the water at a higher level than what is played back to relative to that of FIG. 20. In this regard, the user will hear more water in the audio output.

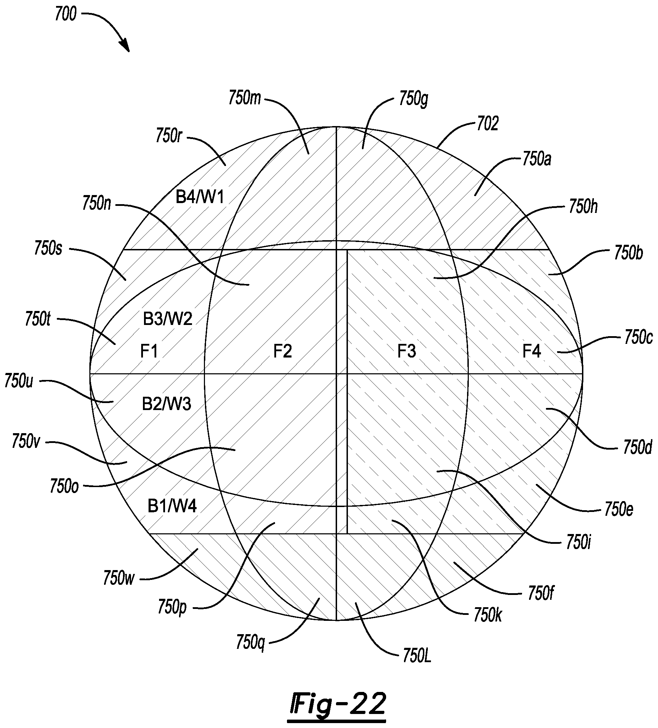

FIG. 22 illustrates an example of the sphere 702 associated with the second selection control 700 in accordance with one embodiment. The sphere 702 generally includes a number of detection quadrants 750a - 750w positioned therein. The detection quadrants 750a - 750w ("750") generally corresponds to sections of the sphere in which touch point 703 can be positioned by the occupant to select the various naturescape items in a corresponding venue. In general, the second selection control 700 and its corresponding image is overlaid on top of the detection quadrants 750a - 750w. Thus, when the touch point 703 is moved in a corresponding detection quadrant 750a - 750w, the user interface 530 transmits a signal indicative of the location on point 703 on quadrant which corresponds to a particular naturescape to the audio system 102. In turn, the audio system 102 plays back the corresponding naturescape (e.g., water, birds, trees) and corresponding volume or gain level based on the location of the touch point 703 on the detection quadrant 750.

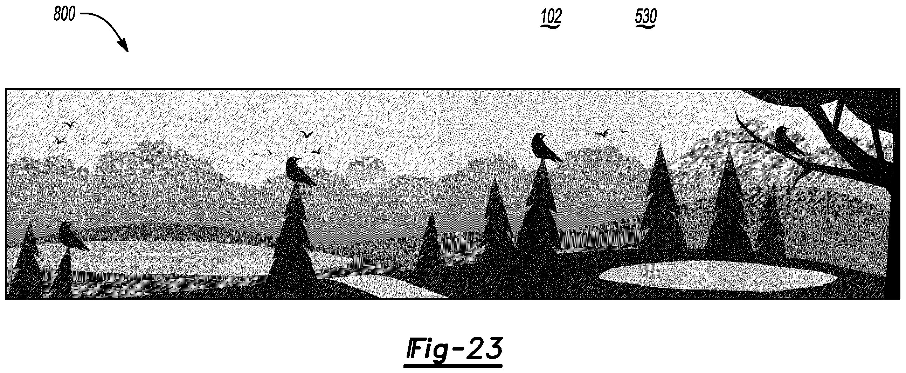

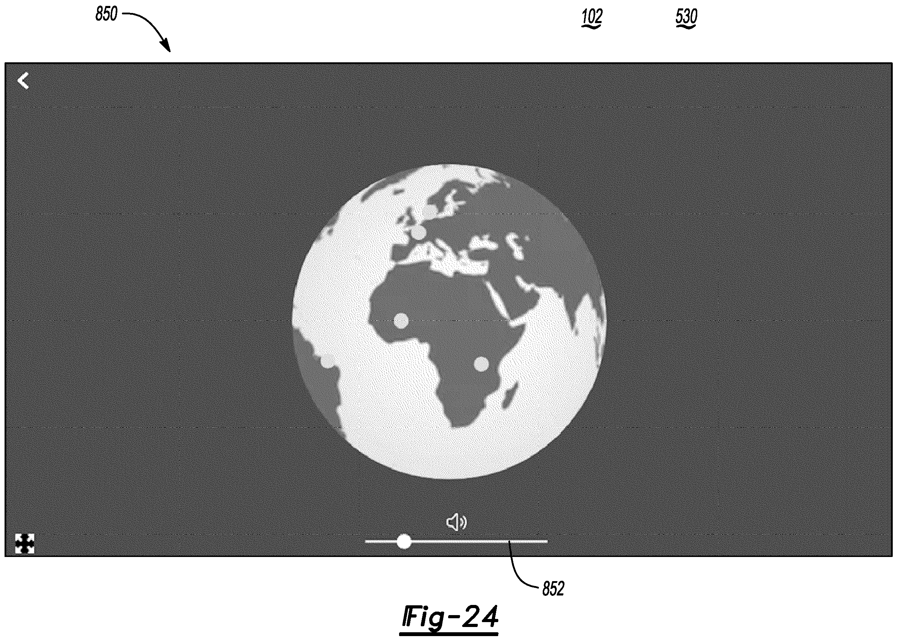

FIG. 23 illustrates one example of a virtual venue 800 and corresponding nature related features that comprise naturescapes that may be presented on the user interface 530 in accordance with one embodiment. The example of the virtual venue 800 shown in FIG. 24 generally corresponds to the nature venue as has been described above with various nature related features such as water, birds, trees that may be played back via the audio system 102. The graphical representation of nature related features illustrated in the virtual venue 800 may be traversed by the occupant on the user interface 530 based on the description provided above. It is recognized that there may be any number of ways of creating different scenes for the virtual venue 800. In one example, the virtual venue 800 may also include specific elements, such as birds as an additional layer. It is recognized that any controller as disclosed herein may utilize artificial intelligence (AI) to generate any one or more of the scenes.

FIG. 24 illustrates one example of a universal selection field 850 as presented on a user interface 530 in accordance with one embodiment. As shown, the universal selection field 850 is generally formed in the shape of a global depicting various geographical locations on the planet earth. A user may select and geographical location on the universal selection field 850 such that the audio system 102 plays back audio that is unique to the selected location. As shown, the user may adjust the volume of the audio that is being played back via first volume control 852.

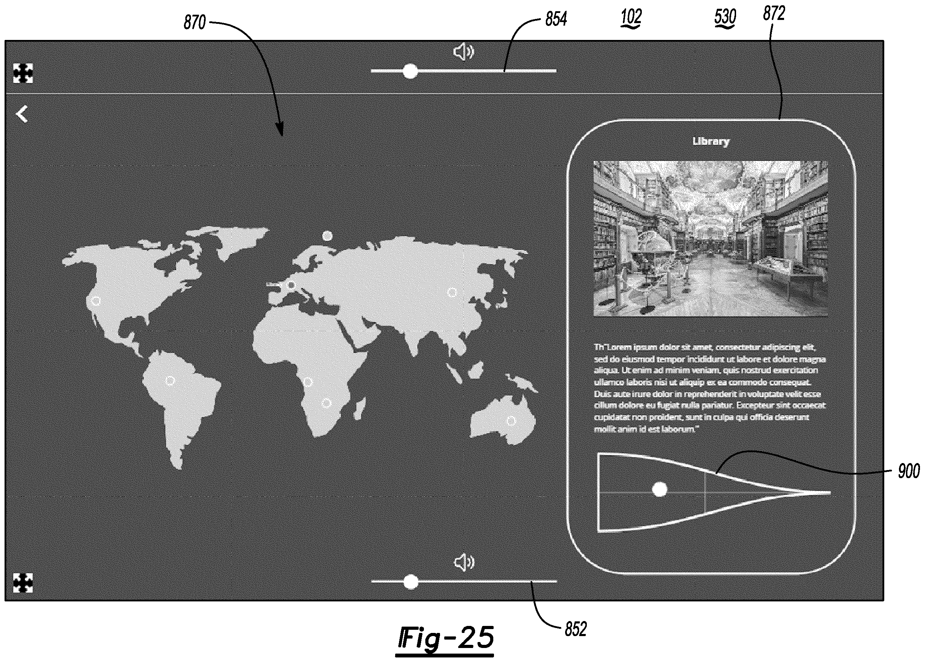

FIG. 25 illustrates another example of the universal selection field 870 as presented on the user interface 530 in accordance with one embodiment. The universal selection field 870 shown as illustrated on a planar layout across the user interface 530 as opposed to a sphere shown in FIG. 24. The universal selection field 870 includes a control mechanism 900 that adjusts the level on the naturescapes and the level of the virtual venues. The control mechanism 900 will be discussed in more detail below. The universal selection field 870 illustrates a library field 872 that may be selected by a user. Upon selection, the user may hear natural sounds one would expect to hear in the library such as for example, footsteps, pages in books being turned, etc. in addition to reverb found in the library. The user may select a geographical location on the universal selection field 870 such that the audio system 102 plays back audio that is unique to the selected location. As shown, the user may adjust the volume of the audio that is being played back via the first volume control 852. A second volume control 854 is also positioned on the user interface 530 to control an overall audio volume control of the audio system.

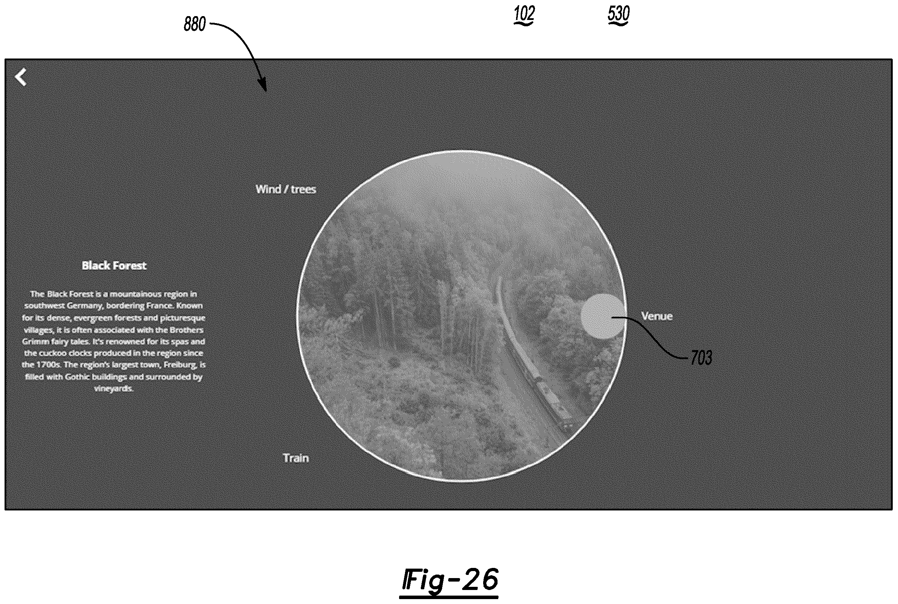

FIG. 26 illustrates an example of an image 880 of an actual nature scene as presented on the user interface 530 in accordance with one embodiment. The user may maneuver the touch point 703 within the image 880 to select, for example, a particular naturescape (or sounds) such as wind/trees, the sounds of a train as they appear in the particular scene, and venue for the audio system 102 to play back. The image 880 illustrates, in one example, a forest where the venue element is only heard when the touch point 703 is positioned within the particular scene shown in the image 880. The user may slide the touch point 703 toward one side of the scene (e.g., the forest where the train is located) to hear sounds attributed to the train and to the other side of the scene to hear sounds attributed to the wind/trees. The user interface 530 may also indicate what place the image of the nature scene corresponds to. In this example, the nature scene of the image corresponds to the Black Forest which is located in Germany.

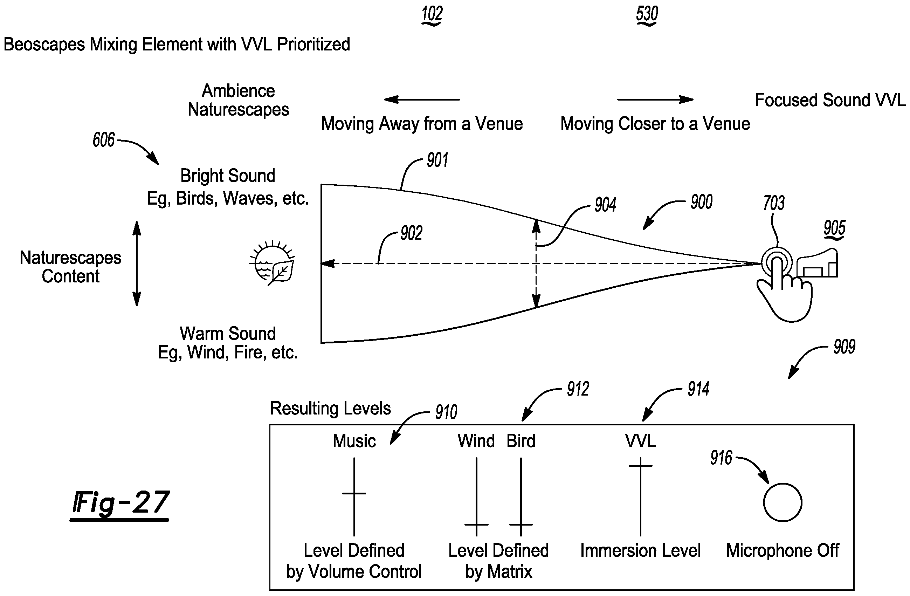

FIG. 27 illustrates an example of a control mechanism 900 for controlling aspects related to naturescapes (e.g., mix levels 606) and selected virtual venue 905 in accordance with one embodiment. The control mechanism 900 enables a user to control the level of the naturescapes 606 (e.g., mix levels 606 (or naturescapes, nature sounds, etc.) within the selected virtual venue 905 in varying degrees via the audio system 102. It is recognized that the audio system 102 enables the user the ability to select the virtual venue (e.g., church, hall/amphitheater (e.g., Carnegie Hall), etc. as noted above and further enables the user to control the amount of volume or level of the nature sound 606 that is played back in the selected virtual venue 905 via the control mechanism 900. In this case, the control mechanism 900 is not used within the audio system 102 to adjust or change the playback of primary audio that is being played by the user by the audio system 102 (e.g., song or audio (non-musical audio) from the mobile device or song or other audio (non-musical audio) being played back by the audio system 102 in the vehicle).

The control mechanism 900 may be generally defined by a bounded area 901 (e.g., funnel type shape as shown in FIG. 27) and includes a first axis (or horizontal axis) 902 and a second axis (or vertical axis) 904). The user may move the touch point 703 along the first axis 902 and the second axis 904 of the bounded area 901 and vary the playback between various mix levels 606 (e.g., bright and warm sounds) of the naturescapes within the selected virtual venue 905. The bright sounds may correspond to birds, wave, etc. The warm sounds may correspond to wind, fire, etc. In the example illustrated in FIGURE 27, the touch point 703 is positioned to the further right point on the selected virtual venue 905 which is indicative of the gain for the naturescapes 606 being turned all the way down such that the primary audio is only played back in the selected virtual venue 905.

As generally shown at 909, primary music level (or primary audio) 910 is not affected by the placement of the touch point 703 within the bounded area 901. However, naturescapes 606 is turned all the way down as reflected by the placement of the touch point 703 within the bounded area 901 (e.g., the touch point 703 is positioned adjacent or close to an icon representing the selected virtual venue 905. Similarly, as shown at 916, the microphone(s) as positioned throughout the vehicle are selected off and therefore, the occupants' voice is not captured and played back by the audio system 102 along with primary audio and the naturescape 606 within the virtual venue 905. It is recognized that the user may select a microphone playback feature in which the user selects, via the user interface 530, an option to activate one more microphones positioned throughout the vehicle such that the microphones capture audio from within the cabin and the audio system 102 plays the captured audio from within the cabin along with the primary audio, the nature sounds, and within the selected virtual venue. Consider the example in which the user selects a church for the selected virtual venue. In this case, the user (or occupant(s)) may clap their hands to gospel music that is playing back as the primary audio and the captured audio of the clapping may be played back in the virtual venue of the church. Additionally, it is possible for the user to activate the nature sounds for playback (e.g., rain, waves, etc.) such that the nature sounds, along with the primary audio (e.g., the gospel music) and the captured audio signal from within the cabin (e.g., hand clapping) is played back in the selected virtual venue corresponding to the church.

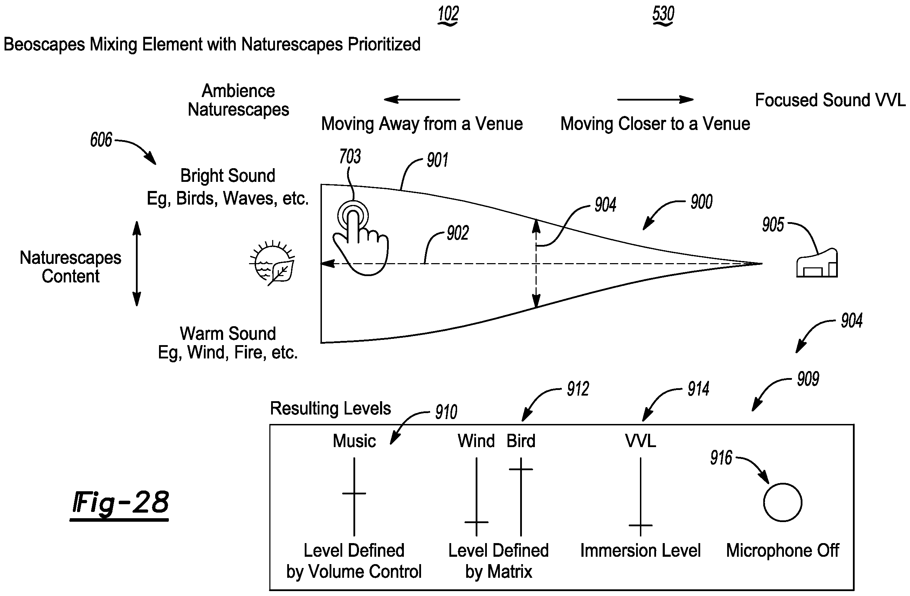

FIG. 28 illustrates an example of the control mechanism 900 for controlling aspects related to naturescapes (e.g., mix levels 606) and selected virtual venue 905 in accordance with one embodiment. In this example, it can be seen that that the user (or occupant) has moved the touch point 703 significantly toward the bounded area 901 the level of the mixes 606 of the naturescapes. In this case, the audio system 102 may play the bright sounds (or mix 606) at a higher level within the selected virtual venue 905 than that of the warm sounds. Similarly, the audio system 102 plays back the naturescape of the bright sounds predominantly over the primary audio. This aspect is generally shown at 909 where the level for the primary audio 910 is shown to be less than the level of the nature sounds corresponding to bright sounds including the waves and the birds. Given that the touch point 703 is moved along the bounded area 901 to increase the level of the nature sounds being played back by the audio system 102, this inherently results in the selected virtual venue 905 providing a reduced sound image in the selected venue. This can be seen at 914 as the level for the selected virtual venue 905 is low.

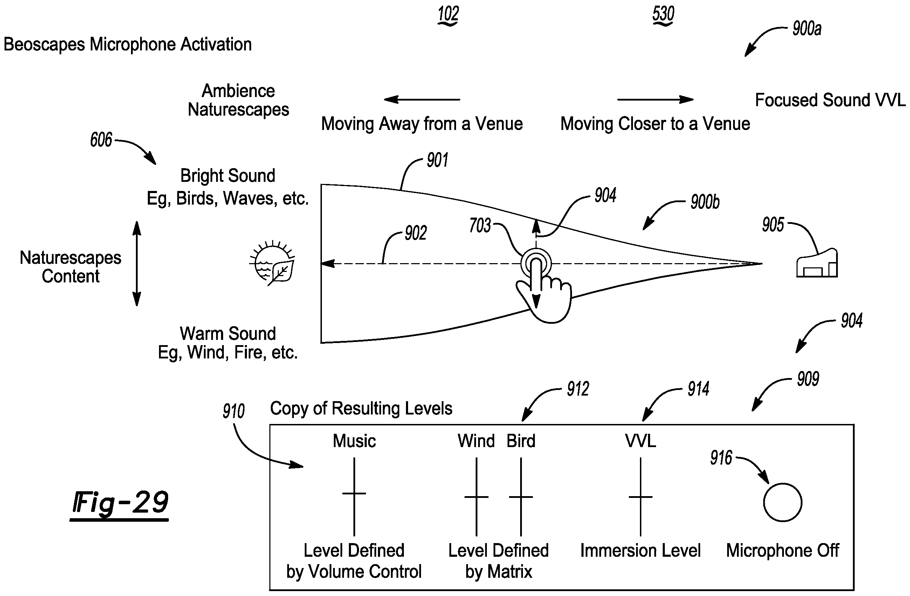

FIG. 29 illustrates an example of the control mechanism 900 for controlling aspects related to naturescapes (e.g., mix levels 606) and the selected virtual venue 905 in accordance with one embodiment. In this example, it can be seen that that the user (or occupant) has moved the touch point 703 along the bounded area 901 toward a middle point of the bounded area 901 such that the level of the nature sounds (see 912), the effect of the selected virtual venue 905 (or immersion level of the selected virtual venue (see 914)) are similar to one another. It can also be seen that the level of primary audio (see 910) is also similar to the levels of the amount of virtual venue being applied and the level of the naturescapes.

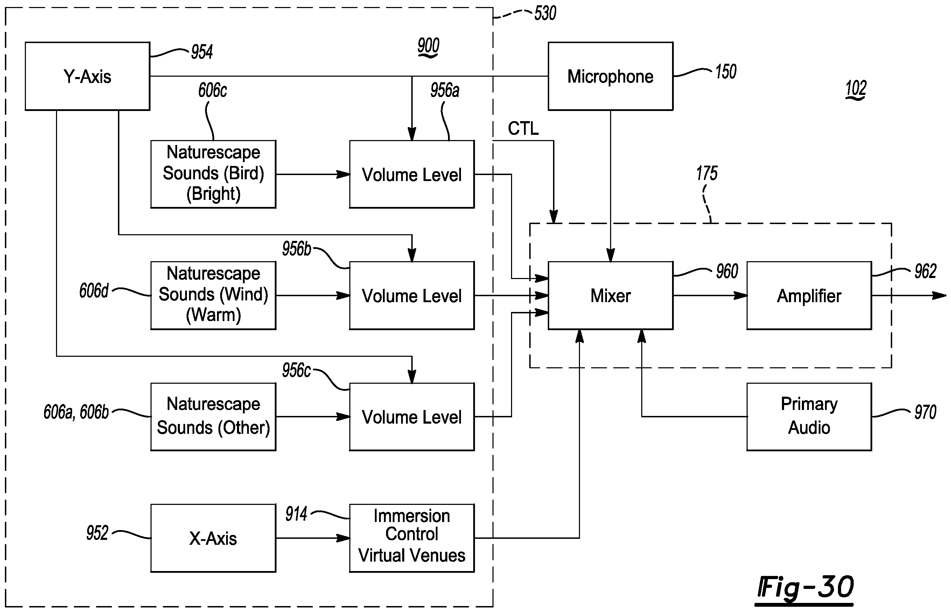

FIG. 30 illustrates a schematic diagram 950 for controller various levels of the naturescapes (or the mix levels 606a - 606d) and the virtual venues with the audio system 102 in accordance with one embodiment. Specifically, the schematic diagram 950 illustrates the audio system 102 generally includes the audio controller 175 and the user interface 530. As noted in connection with FIGs. 27 - 29, the user interface 530 generally enables the user to select or adjust various mix levels 606a - 606d (or naturescapes) and the corresponding levels via user selection via the control mechanism 900. First axis input 952 corresponds to the input provided by the control mechanism 900 as selected and illustrated in FIGs. 27 - 29 relative to the first axis 902. The immersion control (or virtual venues input) 914 then provides an output to a mixer 960 of the audio controller 175.

Second axis input 954 corresponds to the level selected between the naturescape and the selected virtual venue 905 (see FIGs 27 - 29) as selected relative to the second axis 904. As shown in FIGs. 27 - 29, the user may select the level of naturescapes and the selected virtual venue 905 based on the position of the touch point 703 on the second axis 904 within the bounded area 901. The user interface 530 provides an output indicative of the desired level for the selected mix level 606a - 606d (or naturescape) and/or the selected virtual venue 905 to the audio controller 175. The user interface 530 adjusts the level of the selected virtual venue 905. The audio controller 175 is generally configured to receive primary audio (or music) 970 from another audio source (e.g., mobile device, radio, CD player, etc.) to play along with the selected mix level (or nature scape) 606a - 606d for the selected virtual venue 905.

In general, the audio controller 175 includes the mixer 960 to mix the various levels of the naturescapes 606, the primary audio 970, and the selected virtual venue 905. Thus, in connection with the naturescapes 606, the mixer 960 adjusts the overall level (or volume) for the naturescapes 606 based on the volume information provided by the level circuits 956a - 956c. The level circuits 956a - 956c generally provide information corresponding to the selected level (or amount of volume) that is being requested to be applied via the control mechanism 900. In addition, the mixer 960 may also receive a signal from an immersion control circuit 914 which generally provides information corresponding to the amount of level to be applied to the selected virtual venue 905 based on the position of the touch point 703 on the first axis 902 as set forth in FIGs 28 - 30. The mixer 906 also receives the primary audio 970 to combine the primary audio 970 with the selected levels (or volume) of the naturescapes 606, the selected level (or volume) of the selected virtual venue 905 and the primary audio. The mixer 906 combines the selected levels of the naturescapes 606 and the virtual venue 905 along with the primary audio and provides a first audio output to amplifier 962. The amplifier 962 amplifies the audio output to generate a final audio output for transmission to the loudspeakers in the vehicle.

The user interface 530 also provides a control signal to the audio controller 175 to receive an input for any one or more of the microphones 150 positioned in the vehicle. In this case, the audio controller 175 may receive captured audio from within the cabin of the vehicle and play this captured audio along with the naturescapes 606, the primary audio 970 within the selected virtual venue 905. One example of this aspect is set forth above in connection with the occupant(s) clapping their hands where such audio is captured and played in the selected virtual venue 905 of a church along with the primary audio 970. As further noted, one of the naturescapes 606 may also be played back along with the primary audio 970 and captured audio within the vehicle.

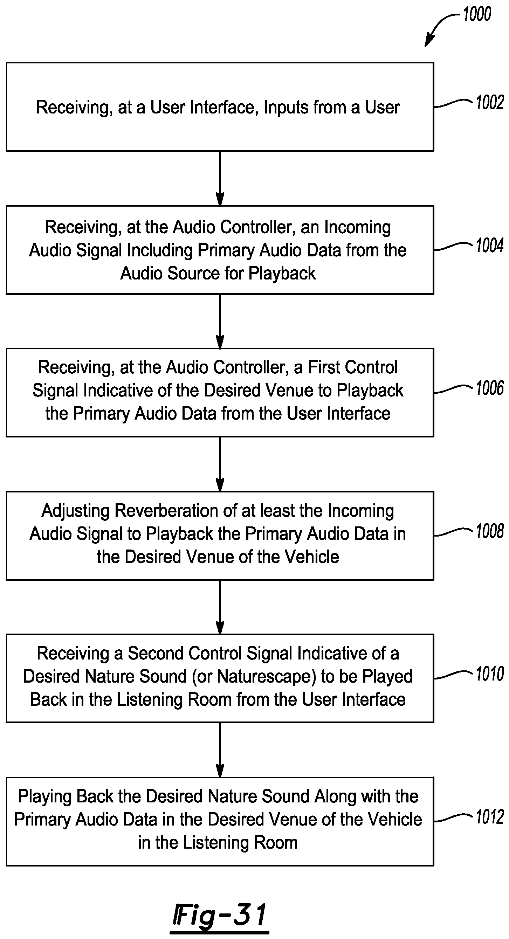

FIG. 31 illustrates a method 1000 for generating audio in a listening room of the vehicle 100 in accordance with one embodiment. It is recognized that the method 1000 may be utilized for the user interface 530 positioned on the vehicle and/or for a user interface 530 positioned on mobile device(s) 1102 as disclosed in connection with the seat-based naturescapes as noted below.

In operation 1002, the user interface 530 receives various input from a user (e.g., driver or vehicle occupant). In operation 1004, the audio controller 175 receives an incoming audio signal including primary audio data from the audio source 560 to playback the audio in the vehicle 100. In operation 1006, the audio controller 175 receives a first control signal from the user interface 530 in any of the manner disclosed above. The first control signal may be indicative of a desired venue (i.e., selected virtual venue 905).

In operation 1008, the audio controller 175 adjusts reverberation of at least the incoming audio signal to playback the primary audio data in the desired venue (e.g., selected virtual venue) in the vehicle 100. In operation 1010, the audio controller 175 receives a second control signal indicative of a desired nature sound (e.g., naturescape) to be played back in the listening room. The audio controller 175 receives the second control signal from the user interface 530. In operation 1012, the audio controller 175 plays back the desired nature sound along with the primary audio data in the desired venue of the vehicle 100. Additionally or alternatively, the audio controller 175 may receive the captured audio from within the cabin of the vehicle and play this captured audio along with the naturescapes 606, the primary audio 970 within the selected virtual venue 905. The audio controller 175 may transmit an audio output signal including the primary audio data, the desired nature sound, and/or the captured audio to one or more loudspeakers in the vehicle. Alternatively, the audio controller 175 may wirelessly transmit the audio output signal including the primary audio data, the desired nature sound, and/or the captured audio to the one or more mobile devices 1102 as positioned about one or more seats 109, 110, 112a, and 112b of the vehicle.

### SYSTEM AND METHOD FOR PROVIDING SEAT-BASED NATURESCAPES AUDIO

Based one or more aspects noted above, it is possible to extend the audio system 102 to include a seat-based component where an individual seat occupants (e.g., passenger) positioned in the vehicle 100 can independently adjust their own scene-related naturescape sound mix. For example, any occupant may be positioned in the driver seat 109, the passenger seat 110, the left rear passenger seat 112a, and the right rear passenger seat 112b and control their own naturescape mix (see Figure 1 for reference to the seats 110 and 112a - 112b). As further shown in FIGURE 1, the occupant may include a mobile device 1102 that is positioned about any one or more of the driver seat 109, the passenger seat 110, the left rear passenger seat 112a, and the right rear passenger seat 112b. In this regard, the mobile device 1102 may engage in bi-directional wireless communication with the audio controller 175. The mobile device 1102 may transmit, but not limited to: (i) commands indicative of a desired (or primary) audio content to be played back by the audio controller 175, (ii) commands indicative of a desired naturescape to be played back with the primary audio, and/or (iii) commands indicative of a desired immersion control to focus the audio in an individual sound zone (ISZ) located around each of the driver seat 109, the passenger seat 110, the left rear passenger seat 112a, and the right rear passenger seat 112b.

The interior cabin as illustrated in FIGURE 1 generally includes a listening environment 177 which defines a space where the driver and the passenger(s) experience the audio that is played back by the audio system 102. For example, the listening environment 177 generally defines various ISZs that encompass an area surrounding the seats 109, 110, 112a and 112b. With sound immersion and control thereof, it is possible to enable the audio to be heard by the driver and/or the passengers in the various seats 109, 110, 112a, and 112b to extend beyond stereo left and right, providing a full range of height, depth, and breath of music in a 3-D sound field. Thus, in this regard, the driver and/or passenger can control the focus of the audio output on one fixed-point called a listening position about each of the seats 109, 110, 112a, and 112b. Various formats of 3D based audio formats may include, but not limited to: Dolby ATMOS ^{®}, Sony 360 ^{®}, and Auro 3D.

It is recognized that the audio system 102 may utilize cross cancellation and/or active noise cancellation to cancel noise that leaks from neighboring zones in the vehicle 100. It is also recognized that the concepts disclosed can be extended to not only include mobile devices that serve as an audio source, but to any audio sources with user interfaces 530 that are coupled directly to the vehicle 100 such as an audio head unit that may be attached to various seatbacks or other areas proximate to or within an ISZ that encompasses a particular seat 109, 110, 112a and 112b. Thus, in this regard any reference to the mobile device 1102 and any operation performed herein, may also apply to the audio sources with user interfaces 530 positioned within (or attached) to aspects of the vehicle 100 (e.g., seat back, headrests, headliners, etc.).

Referring back to the naturescape aspect, the audio system 102 may generally provide a "stereo bed" of sound files that covers steady-state and generic sounds (e.g., nature related sounds). Each occupant can adjust their blend of dynamic sound elements via a user interface 530 on the mobile device 1102 or with a user interface that controls the audio controller 175. Thus, these signals may be routed to individual nearfield loudspeakers (e.g., the CTR speaker 124, the FL speaker 113, the FR speaker 115, and the at least one pair of surround speakers such as the LS speaker 117, the RS speaker 119, the LR speaker 129 and the RR speaker 130 or a combination of speaker sets) that are positioned proximate to each ISZ or seat 109, 110, 112a, and 112b.

Generally, for example, the driver may select a naturescape that corresponds to the "Forest" as the desired nature scene. The audio system 102 may playback a stereo bed which generally includes a steady signal such as wind noise, a gentle babbling brook, or similar. On a user interface for each mobile device 1102, each passenger may move their avatar around between, for example, 3 or more specific, dynamic sound elements. For example, birds, bugs, elk bugling, or similar dynamic sounds. The users may independently adjust their blend of these dynamic elements, for example, by adding more birds, and less bugs, more elk and less birds, etc. A matrix mixer is disclosed that downstream of shared nature sound file players, and each driver or occupant's nearfield mix is adjusted accordingly. In addition, each occupant can adjust their personal immersion level based on the present disclosure as set forth herein.

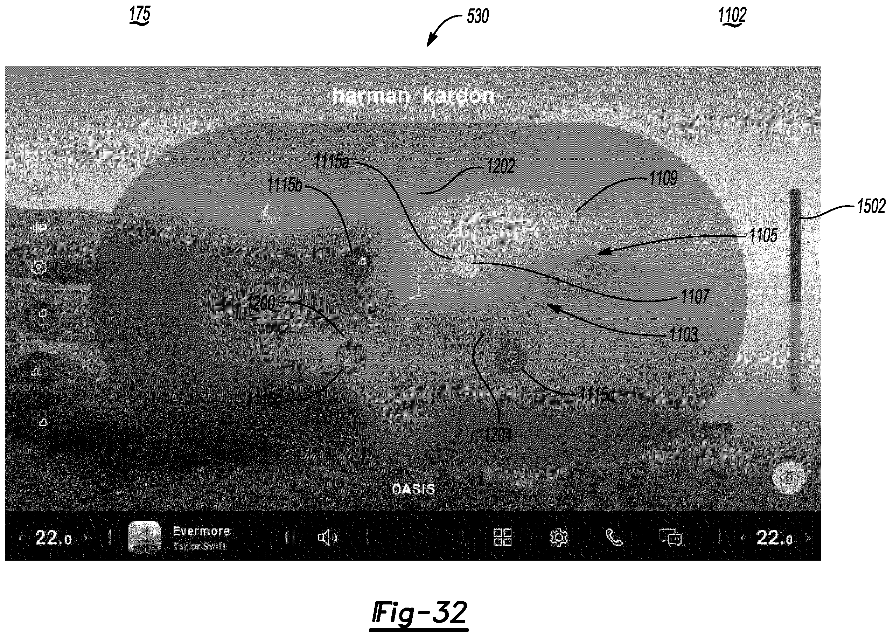

FIG. 32 illustrates one example of the user interface 530 to enable a seat-based extension of the playback of one or more naturescapes for one or more occupants positioned in the vehicle 100 in accordance with one embodiment. The user interface 530 may part of the mobile device 1102 or be directly coupled to the audio controller 175. If the user interface 530 is part of the mobile device 1102, it is recognized that the mobile device 1102 may transmit a wireless command to the audio controller 175. The user interface 530 depicts a three-axis image-based legend that designates: (i) a first naturescape corresponding to an audio playback of thunder to be selected on a first axis 1200, (ii) a second naturescape corresponding to an audio playback of birds to be selected on a second axis 1202, and (iii) a third naturescape corresponding to an audio playback of waves to be selected on a third axis 1204. In one embodiment, the user interface 530 provides a touch point 1103 that can be moved one along any one or more of the first axis 1200, the second axis 1202, and the third axis 1204. For example, the touch point 1103 is generally illustrates as a series of concentric spheres 1105 (or shapes 1105) that surround a center sphere 1107. An outermost sphere 1109 generally surrounds innermost spheres and the center sphere 1107. It is recognized that the shape may be different and that the generally shaped form of the spheres may take any number of different shapes.

In general, the first axis 1200 and the second axis 1202 generally correspond to the naturescape of a thunder-based audio output. Thus, as the touch point 1103 is moved onto or about the first axis 1200 and the second axis 1202, the audio controller 175 transmits the thunder-based audio output. The second axis 1202 and the third axis 1204 generally correspond to the naturescape of bird sounds (or chirps). Thus, as the touch point 1103 is moved onto or about the second axis 1202 and the third axis 1204, the audio controller 175 transmits a bird-chirp based audio output. The first axis 1200 and the third axis 1204 generally corresponds to the naturescape of a wave-based audio output. Thus, as the touch point 1103 is moved onto or about the first axis 1200 and the third axis 1204, the audio controller 175 transmits a wave-based audio output. The user can move the touch point 1103 such that the series of concentric spheres 1105 may overlap onto one or more of the first axis 1200, the second axis 1202, and the third axis 1204 such that any one or more of the waterfall-based audio, the bird chirp audio, and/or the wave based audio can be played back by the audio controller 175. The greater the degree of the concentric spheres 1105 as positioned on one or more of the first axis 1200, the second axis 1202, and the third axis 1204, the greater (or higher) of the level or volume to be played back by the audio controller 175.

The touch point 1103 as shown in FIGURE 32 illustrates that the occupant desires that a majority of the audio playback include the naturescape audio corresponding to that of birds with portions of thunder and waves also being included in the overall audio output. In this regard, the volume (or audio level) of the birds may be greater than that of the thunder and the waves. The occupant may move the center sphere 1107 on any location about the first axis 1200, the second axis 1202, and the third axis 1204 to select a corresponding naturescape.

In another embodiment, the manner in which the occupant selects the corresponding naturescape may involve that the occupant selects various points on the outermost sphere 1109 whereas the touch point 1103 remains generally stationary. In this case, the user may select and move the corresponding point of the outermost sphere 1109 a deeper into a corresponding naturescape region to increase the level or volume of the audio playback. Thus, in this regard, it can be seen that one or more points on the outermost sphere 1109 are positioned predominantly in the naturescape region corresponding to bird audio.

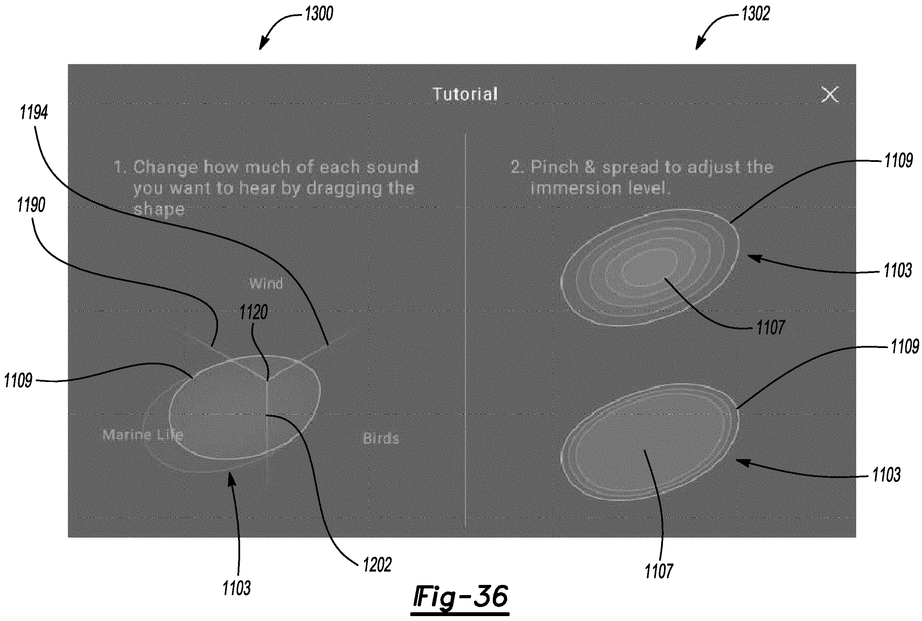

It is recognized that the primary audio being transmitted by the audio controller 175 may also be played simultaneously with the naturescape that is being played back. An occupant may perform immersion control selection 1210 (see FIG. 36) to control the amount of immersion provided by the audio system 102. The immersion control selection 1210 involves, among other things, selecting the outermost sphere 1109 with two fingers and bringing the two fingers close to one another to decrease the overall width touch point 1103 such that all of the concentric spheres 1105 also decrease. In one example, the narrower the width of the concentric spheres 1105, the greater the immersion and application of the selected virtual venues. It is recognized that the opposite condition may be applied. This aspect results in the audio system 102 increasing the sound immersion level of the bird audio output that is generated for the particular occupant that desires the increased sound immersion level. Audio immersion generally involves., among other things, the audio system 102 playing back audio in a manner in which the audio is sensed to come from all directions surrounding the occupant. Stereo based audio generally involves the scenario in which audio is played back from a center of the occupant and from left and right sides of the occupant. Thus, audio immersion may improve the overall naturescape experience in comparison to a stereo based sound implementation.

In another embodiment, sound immersion control may be performed as follows: the occupant may select the center sphere 1107 and move the sphere 1107 inwardly away from the outermost sphere 1109 or outwardly toward the outermost sphere 1109 while the touch point 1103 (and the outermost sphere 1109) remains generally stationary. Such movement of the center sphere 1107 generates a change in a visual topography of the touch point 1103 which causes a change in the immersion control. This aspect will be discussed in more detail below.

It is recognized that each occupant in each of the seats 109, 110, 112a, and 112b can independently select the various naturescape that he/she so desires irrespective of what other occupants can select. It is also recognized that each occupant may continue to playback the primary audio that is being played back by the audio system in the vehicle 100 while controlling the particular type of naturescape, the sound immersion level of the naturescape, and volume of the naturescape. Conversely, if the user interface 530 is part of the mobile device 1102, the occupant may select to utilize the vehicle's naturescape that is provided by the audio system 102 while utilizing a primary audio signal that is played back by the occupant's mobile device 1102. While not generally shown, the image of FIG. 32 may also include a reference to which seat (e.g., 109, 110, 112a, and 112b) the occupant is positioned in so that the occupant knows that his/her mobile device 1102 is properly paired and communicating to the audio controller 175 from the location that the occupant is positioned in within the vehicle 100.

FIG. 32 also includes a master volume level selector 1502 that enables the occupant the ability to select an overall volume for the entire naturescape mix being selected through his/her mobile device 1102. The master volume level selector 1502 may enable volume selection of the primary audio being played back by the audio system 102. In other embodiments, the master volume level selector 1113 may be used to only control the volume level of any and all naturescapes being played back by the audio system 102. In addition, the mobile device 1102 may also include occupant visual indicators 1115a - 1115d which correspond to visual representations of occupants positioned in their respective seat 109, 110, 112a, and 112b.

In general, visual indicator 1115a is shown as being highlighted and corresponds to the location of the occupant that is currently controlling the mobile device 1102 to play the desired naturescape. In this case, it can be seen that the driver who is seated in the seat 109 has his/her mobile device 1102 paired to the audio system 102 and selects the current naturescape of birds for playback. The visual indicator 1115b corresponds to the passenger positioned in the right front seat 110 and the display on the mobile device 1102 provides an indication to the driver who is seated in the seat 109 as to what naturescape is being played back for the passenger positioned in the right front seat 110. In this case, the right front passenger is listening to the naturescape of a bird audio output. It can also be seen that the left rear passenger is listening to the wave based naturescape via indication 115c and that the right rear passenger is listening to at least the wave-based audio.

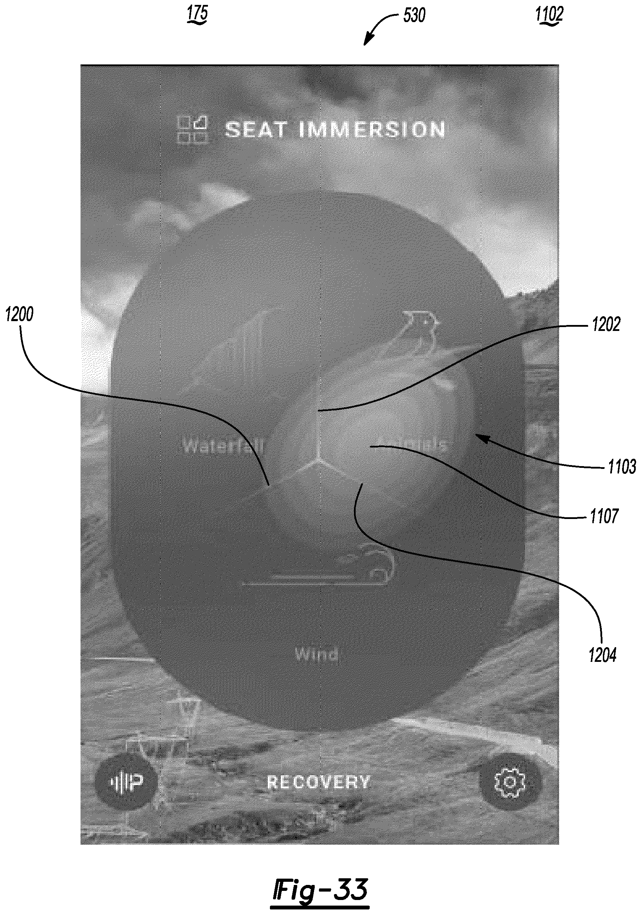

FIG. 33 illustrates another example of the user interface 530 to enable a seat-based extension of the playback of one or more naturescapes for one or more occupants positioned in the vehicle 100 in accordance with one embodiment. FIG. 33 is generally similar to the display depicted in FIG. 32 with the exception of different naturescapes being offered for playback. For example, the first axis 1200 and the second axis 1202 generally correspond to the naturescape of a waterfall-based audio output. Thus, as the touch point 1103 is moved onto or about the first axis 1200 and the second axis 1202, the audio controller 175 transmits the waterfall-based audio output. The second axis 1202 and the third axis 1204 generally correspond to the naturescape of animal sounds. Thus, as the touch point 1103 is moved onto or about the second axis 1202 and the third axis 1204, the audio controller 175 transmits animal-based sounds. The first axis 1200 and the third axis 1204 generally corresponds to the naturescape of a wind-based audio output. Thus, as the touch point 1103 is moved onto or about the first axis 1200 and the third axis 1204, the audio controller 175 transmits a wind-based audio output. The user can move the touch point 1103 such that the series of concentric spheres 1105 may overlap onto one or more of the first axis 1200, the second axis 1202, and the third axis 1204 such that any one or more of the waterfall-based audio, the animal based sounds, and/or the wind based audio can be played back by the audio controller 175. The greater the degree of the concentric spheres 1105 as positioned on one or more of the first axis 1200, the second axis 1202, and the third axis 1204, the greater (or higher) of the level or volume to be played back by the audio controller 175 for that corresponding naturescape.

The touch point 1103 as shown in FIGURE 33 illustrates that the occupant desires that a majority of the audio playback include the naturescape audio corresponding to that of animal sounds with portions of waterfall and wind-based audio also being included in the overall audio output. In this regard, the volume (or audio level) of the animal sounds may be greater than that of the waterfall and the wind. It is also recognized that the occupant may also select the various naturescape by selecting various points on the outermost sphere 1109 as described in connection with FIG. 32 above. Similarly, immersion control may be selected based on the manner described above in connection with FIG. 32.

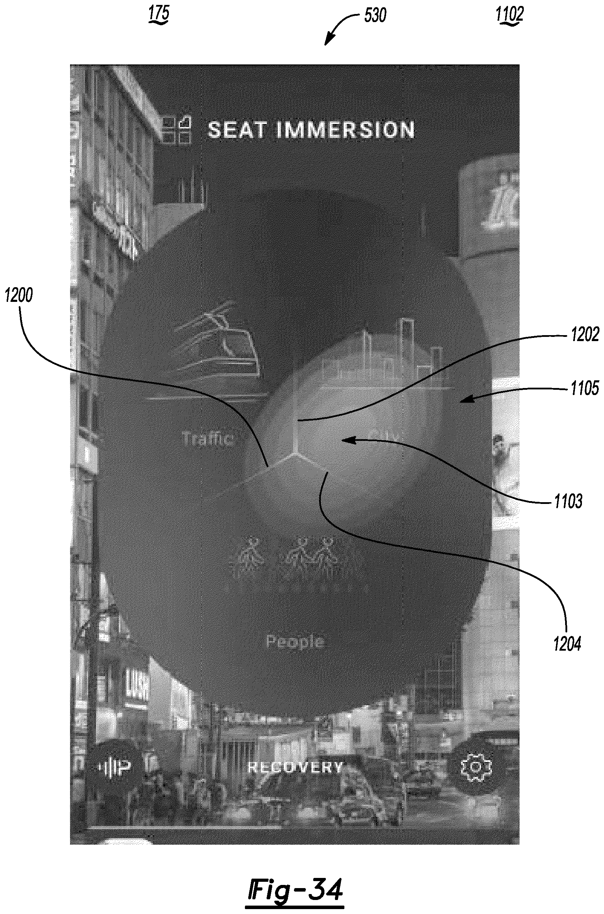

FIG. 34 illustrates another example of the user interface 530 to enable a seat-based extension of the playback of one or more naturescapes for one or more occupants positioned in the vehicle 100 in accordance with one embodiment. FIG. 34 is generally similar to the display depicted in FIGs. 32 - 33 with the exception of different naturescapes being offered for playback. For example, the first axis 1200 and the second axis 1202 generally correspond to the naturescape of a traffic-based audio output. Thus, as the touch point 1103 is moved onto or about the first axis 1200 and the second axis 1202, the audio controller 175 transmits the traffic-based audio output. The second axis 1202 and the third axis 1204 generally correspond to the naturescape of city-based sounds. Thus, as the touch point 1103 is moved onto or about the second axis 1202 and the third axis 1204, the audio controller 175 transmits city-based sounds. The first axis 1200 and the third axis 1204 generally corresponds to the naturescape of a people-based audio output. In this regard, the people-based audio output (or naturescape) corresponds to sound made by people in crowds, children playing with one another, etc. Thus, as the touch point 1103 is moved onto or about the first axis 1200 and the third axis 1204, the audio controller 175 transmits a city-based audio output. The user can move the touch point 1103 such that the series of concentric spheres 1105 may overlap onto one or more of the first axis 1200, the second axis 1202, and the third axis 1204 and that any one or more of the traffic-based audio, the city based sounds, and/or the people based audio can be played back by the audio controller 175. The greater the degree of the concentric spheres 1105 as positioned on one or more of the first axis 1200, the second axis 1202, and the third axis 1204, the greater (or higher) of the level or volume to be played back by the audio controller 175 for that corresponding naturescape.

The touch point 1103 as shown in FIGURE 33 illustrates that the occupant desires that a majority of the audio playback include the naturescape audio corresponding to that of city sounds with portions of traffic and people-based audio also being included in the overall audio output. In this regard, the volume (or audio level) of the city sounds may be greater than that of the traffic and the people-based audio outputs. It is also recognized that the occupant may also select the various naturescape by selecting various points on the outermost sphere 1109 as described in connection with FIG. 32 above. Similarly, immersion control may be selected based on the manner described above in connection with FIG. 32.

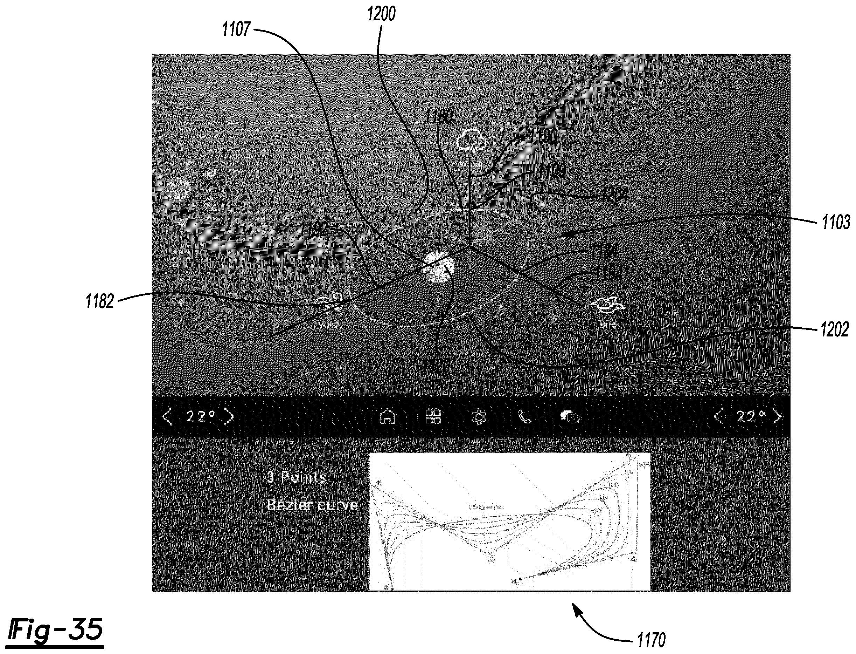

FIG. 35 depict various example of manner in which various naturescapes may be selected in accordance with one embodiment. FIG. 35 illustrates various naturescapes such as water, wind, and bird audio outputs. In one example, and as noted above, the touch point 1103 includes the outermost sphere 1109. In this case, the outermost sphere 1109 defines a number of points 1111 that may be selected by the user to move the touch point 1103 away from a center point 1120 where the first axis 1200, the second axis 1202, and the third axis 1204 intersect with one another. For example, FIG. 35 illustrates a first point 1180, a second point 1182, and a third point 1184 formed on the outermost sphere 1109 that the user can select to move or maneuver away from the center point 1120 to choose the corresponding naturescape accordingly. While FIG. 35 illustrates three points (e.g., 1180, 1182, 1184) it recognized that the touch point 1103 may include any number of points that the user can select/grab and move to and from the center point 1120 to move the touch point 1103 accordingly for selecting one or more of the naturescapes. In one example, Bezier curves may be used to define the overall shape of the touch point 1103 as generally shown at 1170.

In another embodiment that may be used to select a corresponding naturescape, a first additional axis 1190, a second additional axis 1192, and a third additional axis 1194 is shown. In this regard, the first additional axis 1190 may be correspond to naturescape of water, the second additional axis 1192 may correspond to the nature scape of wind, and the third additional axis 1194 may correspond to the naturescape of a bird. As noted above, the touch point 1103 in this embodiment is generally stationary but the occupant may move the first point 1180 on the first additional axis 1190 to or away from the center point 1120 to control the amount of water based naturescape that is played back by the audio system 102. In addition, the occupant may move the second point 1182 on the second additional axis 1192 to or away from the center point 1120 to control the amount of wind based naturescape that is played back by the audio system 102. In addition, the occupant may move the third point 1184 on the third additional axis 1194 to or away from the center point 1120 to control the amount of bird based naturescape that is played back by the audio system 102. It is recognized that the mobile device 1102 may provide any number of additional axes that coincide with any number of naturescapes. For example, the mobile device 1102 may display five naturescape sounds to select from with each naturescape having a corresponding axis that allows the occupant the ability to select a point on the outermost sphere 1105 relative to the center point 1120 to select the desired naturescape.

FIG. 36 depicts various examples of the manner in which the user may select immersion control for the touch point 1103 in accordance with one embodiment. In a first embodiment, as generally shown at 1300, the touch point 1103 may be moved about the first axis 1200, the second axis 1202, and the third axis 1204 to select one or more naturescapes such as the wind, marine life, and birds. For example, the occupant may drag the touch point 1103 about the first axis 1200, the second axis 1202, and the third axis 1204 to change the amount of sound heard for the naturescape by the occupant. As generally shown at 1302, the occupant may pinch or spread the outermost sphere 1109 to adjust the immersion level. Additionally, as noted in connection with the second embodiment of FIG. 35, the occupant may simply select a point on the outermost sphere 1109 and move the point to or away from the center point 1120 to decrease or increase, respectively the desired amount of naturescape to be played back by the audio system 102.

As generally shown at 1302, in a first embodiment, the occupant may pinch or spread the outermost sphere 1109 to adjust the immersion level. In another embodiment and as stated above, the sound immersion control may be performed as follows: the occupant may select the center sphere 1107 and move the sphere 1107 inwardly away from the outermost sphere 1109 or outwardly toward the outermost sphere 1109 while the touch point 1103 (and the outermost sphere 1109) remains generally stationary. Such movement of the center sphere 1107 generates a change in a visual topography of the touch point 1103 which causes a change in the immersion control.

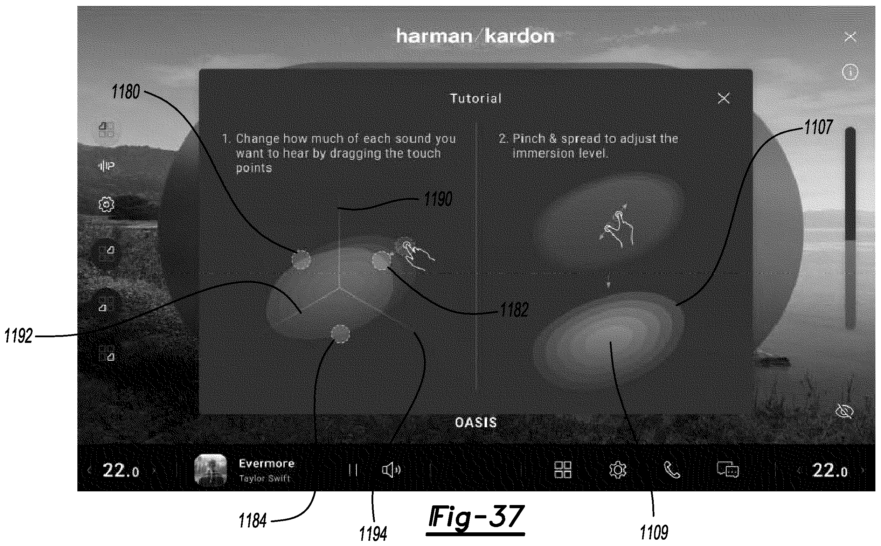

FIG. 37 depicts a tutorial which illustrates the manner in which the occupant selects naturescape and the immersion level on the mobile device 1102 in accordance with one embodiment. FIG. 37. The visual on the left-hand side of the FIG. 37 illuminates the various points 1180, 1182, and 1184 on the outermost sphere 1109 that can be selected by the occupant to select the corresponding naturescape. The visual on the right-hand side of FIG. 37 illustrates a pinch and spread operation to adjust the immersion level. For example, the user may spread the outermost sphere 1109 relative to the center sphere 1107 to increase the immersion level. The user may pinch the outermost sphere 1109 and collapse two fingers closer to one another relative to the center sphere 1107 to decrease the immersion level.

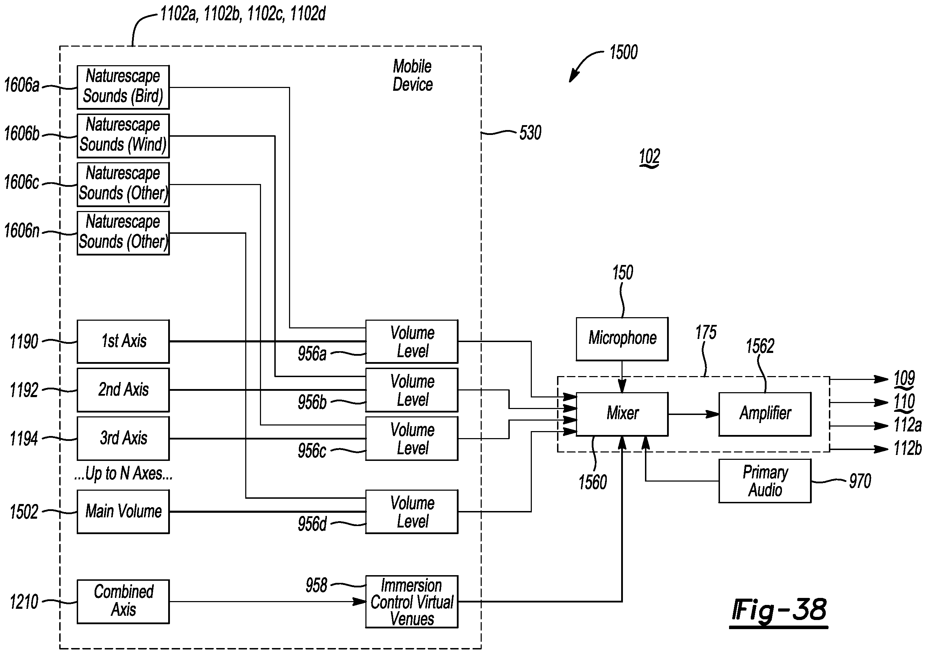

FIG. 38 depicts a schematic diagram 1500 for playing back seat based naturescapes 1606a - 1606n with the audio system 102 in accordance with one embodiment. Specifically, the diagram 1500 illustrates the audio system 102 that generally includes the audio controller 175 and the user interface 530. As noted in connection with FIGs. 32 - 25, the user interface 530 generally enables the user to select or adjust various naturescapes 1606a - 1606n as depicted on a mobile device 1102 located within the vehicle or on a user interface that is positioned in a seatback of the vehicle 100 and that is electrically coupled to the audio controller 175. In generally, it is recognized that a plurality of mobile devices 1102a - 1102n with a corresponding user interface 530 may be positioned within the vehicle. For example, mobile device 1102a may be positioned about seat 109, mobile device 1102b, may be positioned about seat 110, mobile device 102c may be positioned about seat 112a, and mobile device 102d may be positioned about seat 112b. The following description below in addition to the detailed illustrated in FIG. 37 applies to each of the mobile devices 1102a - 1102n.

The naturescapes 1606a - 1606n may correspond to the thunder-based audio, the bird-based audio, the wave-based audio, the traffic-based audio, the city-based audio, the people-based audio, the waterfall-based audio, the animal-based audio, and the wind-based audio, etc. as shown in connection with FIGs 32 - 35. It is recognized that the naturescapes 1606a - 1606n may correspond to other types of audio and should not be limited to cover only those noted in the present disclosure. In general, the audio controller 175 may include memory that stores a bank of naturescapes 1606a - 1606n (or audio files) that are depicted for selection on the user interface 530.

The user interface 530 also provides the overall position of the touch point 1103 as positioned thereon for the selected naturescape(s) and provides an indication of where the touch point 1103 is positioned on any one or more of the first axis 1200, the second axis 1202, and the third axis 1204. The user interface 530 includes level circuits 956a - 956c that each provide an output (or digital information) that is indicative of the desired naturescapes 1606a - 1606n and a corresponding volume (or level) based on the location of the touch point 1103 on the various axes 1200, 1202, and 1204. In general, the level circuit 956a receives a signal indicative of the position of the first point 1180 on the first additional axis 1190 (see FIG. 36) which is indicative of the amount of volume to applied to the naturescape 1606a. The level circuit 956b receives a signal indicative of the position of the second point 1182 on the second additional axis 1192 which is indicative of the amount of volume to be applied to the naturescape 1606b. The level circuit 956c receives a signal indicative of the position of the third point 1184 on the third additional axis 1194 which is indicative of the amount of volume to be applied to the naturescape 1606c.

The user interface 530 includes the main volume level selector 1502 as noted above in connection with FIG. 32. The master volume level selector 1502 that enables the occupant the ability to select an overall volume for the entire naturescape mix being selected through his/her mobile device 1102. The level circuit 956d provides an output indicative of the overall volume be applied to the naturescape mix to the audio controller 175. Immersion control and virtual venues circuit 958 receive information indicative of the desired immersion level as selected via the immersion selection 1210 as discussed above. In one embodiment, each of the mobile devices 1102a - 1102d may also enable the occupant the ability to provide a selected virtual venue such that the occupant in the corresponding seat 109, 110, and 112a - 112b can experience the naturescape audio and/or the primary audio in the desired virtual venue. It is recognized that this may be provided via a separate input provided to the audio controller 175. Each mobile device 1102a -1102d transmits information indicative of the selected virtual venue and/or immersion control to be applied to the desired naturescape to the audio controller 175. In response, the audio controller 175 applies the selected virtual venue and/or immersion control to the selected naturescape 160a - 160n. It is recognized that either one or more of the mobile devices 1102a - 11022n may also provide the primary audio 970. In other examples, the mobile device 1102 may continue to provide signals indicative of the naturescapes 1606a - 1060n and/or the immersion and/or virtual venue, however a different audio source may provide the primary audio 970. Given that the vehicle includes one or more microphones 150, the captured audio received by the one or more microphones 150 may be provided to the audio controller 175.

For a given mobile device 1102, the audio controller 175 includes a plurality of mixers 1560 (e.g., one mixer 1560 for each seat or mobile device positioned proximate to the seat) to mix the various levels of the naturescapes 1606a - 160n, the primary audio 970, captured audio, and the selected immersion and /or virtual venue (from the immersion control and virtual venues circuit 958). Thus, for a single mobile device 1102 (or seat) in connection with the naturescapes 1606 - 1606n, a corresponding mixer 1560 adjusts the overall level (or volume) for the naturescapes 1606a - 1606n based on the volume information provided by the level circuits 956a - 956d. Each corresponding mixer 1560 also receives the signal from the immersion control and virtual venues circuit 958 which generally provides information corresponding to the amount of level to be applied to the selected virtual venue based on the position of the touch point 703 for a corresponding mobile device 1102. The mixer 1560 also receives the primary audio 970 to combine the primary audio 970 with the selected levels (or volume) of the naturescapes 1606a - 1606n, the selected level (or volume) of the selected immersion and/or virtual venue and the primary audio 970.

The mixer 1560 combines the selected levels of the naturescapes 1606a - 1606n, the immersion level and/or the virtual venue along with the primary audio and provides a first audio output to amplifier 1562. The amplifier 1562 amplifies the audio output to generate a final audio output for transmission to the corresponding mobile device 1102 and/or the loudspeakers in the vehicle. It is recognized that the audio controller 175 may be equipped with a plurality of amplifiers 1562 which each amplifier providing the final audio output (or audio output signal) that includes the selected naturescapre 1606a - 1606n, primary audio 970, and captured audio to a corresponding mobile device 1102 positioned about a corresponding seat 109, 110, 112a, 112b or to individual nearfield loudspeakers positioned each seat 109, 110, 112a, 112b. It is recognized that individual occupants as positioned throughout the seats 109, 110, 112a, 112b in the vehicle can adjust their blend of dynamic sound elements (e.g., naturescapes 1606a - 1606n, primary audio 970, and/or captured audio) via their respective user interface on their mobile device 1102 and further the audio controller 175 may transmit each occupant's desired dynamic sound elements directly to their respective mobile device 1102 and/or to loudspeakers positioned about each of the seat in which such a user is positioned at.

The user interface 530 also provides a control signal to the audio controller 175 to receive an input for any one or more of the microphones 150 positioned in the vehicle. In this case, the audio controller 175 may receive captured audio from within the cabin of the vehicle and play this captured audio along with the naturescapes 606, the primary audio 970 within the selected virtual venue 905. One example of this aspect is set forth above in connection with the occupant(s) clapping their hands where such audio is captured and played in the selected virtual venue 905 of a church along with the primary audio 970. As further noted, one of the naturescapes 606 may also be played back along with the primary audio 970 and captured audio within the vehicle. The audio controller 175 is generally configured to receive primary audio (or music) 970 from another audio source (e.g., mobile device, radio, CD player, etc.) to play along with the selected mix level (or naturescape) 1606a - 1606d for the selected immersion and/or virtual venue.

It is recognized that the controllers as disclosed herein may include various microprocessors, integrated circuits, memory devices (e.g., FLASH, random access memory (RAM), read only memory (ROM), electrically programmable read only memory (EPROM), electrically erasable programmable read only memory (EEPROM), or other suitable variants thereof), and software which co-act with one another to perform operation(s) disclosed herein. In addition, such controllers as disclosed utilize one or more microprocessors to execute a computer-program that is embodied in a non-transitory computer readable medium that is programmed to perform any number of the functions as disclosed. Further, the controller(s) as provided herein includes a housing and the various number of microprocessors, integrated circuits, and memory devices ((e.g., FLASH, random access memory (RAM), read only memory (ROM), electrically programmable read only memory (EPROM), electrically erasable programmable read only memory (EEPROM)) positioned within the housing. The controller(s) as disclosed also include hardware-based inputs and outputs for receiving and transmitting data, respectively from and to other hardware-based devices as discussed herein.

While exemplary embodiments are described above, it is not intended that these embodiments describe all possible forms of the invention. Rather, the words used in the specification are words of description rather than limitation, and it is understood that various changes may be made without departing from the spirit and scope of the invention. Additionally, the features of various implementing embodiments may be combined to form further embodiments of the invention.

## Claims

1. A system for generating audio in a listening environment of a vehicle, the system comprising:
a memory device; and
at least one audio controller including the memory device and being programmed to:
receive a first signal indicative of a first selected desired nature sound from a first mobile device positioned about a first seat of the vehicle;
receive a second signal indicative of a second selected desired nature sound from a second mobile device positioned about a second seat of the vehicle, the second selected desired nature sound being different than the first selected desired nature sound;
generate a first audio output signal including the first selected desired nature sound and a second audio output signal including the second selected desired nature sound;
transmit the first audio output signal to one of the first mobile device and a first loudspeaker positioned about the first seat to playback the first audio output signal; and
transmit the second audio output signal to one of the second mobile device and a second loudspeaker positioned about the second seat to playback the second audio output signal.

2. The system of claim 1, wherein the audio controller is further programmed to receive a first incoming audio signal including first primary audio data from the first mobile device for playback.

3. The system of claim 2, wherein the audio controller is further programmed to receive a second incoming audio signal including second primary audio data from the second mobile device for playback.

4. The system of claim 3, wherein the audio controller is further programmed to receive a first control signal indicative of a first desired venue from the first mobile device to playback the first primary audio data.

5. The system of claim 4, wherein the audio controller is further programmed to adjust reverberation of the first incoming audio signal based on the first control signal to playback the first primary audio data in the first desired venue at the first seat in the vehicle.

6. The system of claim 4 or 5, wherein the audio controller is further programmed to receive a second control signal indicative of a second desired venue from the second mobile device to playback the second primary audio data.

7. The system of claim 6, wherein the audio controller is further programmed to adjust reverberation of the second incoming audio signal based on the second control signal to playback the second primary audio data in the second desired venue at the second seat in the vehicle.

8. The system of claim 6 or 7, wherein the audio controller is further programmed to playback the first selected desired nature sound along with the first primary audio data in the first desired venue at the first seat in the vehicle in the listening environment.

9. The system of claim 8, wherein the audio controller is further programmed to playback the second selected desired nature sound along with the second primary audio data in the second desired venue at the second seat in the vehicle in the listening environment.

10. The system of any preceding claim, wherein the audio controller is further programmed to receive a captured audio signal indicative of captured audio from within the listening environment of the vehicle, and preferably, the audio controller is further programmed to:
generate the first audio output signal including the captured audio and the second audio output signal including the captured audio;
transmit the first audio output signal with the first selected desired nature sound along with the captured audio to one of the first mobile device and the first loudspeaker positioned about the first seat to playback the first audio output signal; and
transmit the second audio output signal with the second selected desired nature sound along with the captured audio to one of the second mobile device and the second loudspeaker positioned about the second seat to playback the second audio output signal.

11. A method for generating audio in a listening environment of a vehicle, the method comprising:
receiving a first signal indicative of a first selected desired nature sound from a first mobile device positioned about a first seat of the vehicle;
receiving a second signal indicative of a second selected desired nature sound from a second mobile device positioned about a second seat of the vehicle, the second selected desired nature sound being different than the first selected desired nature sound;
generating a first audio output signal including the first selected desired nature sound and a second audio output signal including the second selected desired nature sound;
transmitting the first audio output signal to one of the first mobile device and a first loudspeaker positioned about the first seat to playback the first audio output signal; and
transmitting the second audio output signal to one of the second mobile device and a second loudspeaker positioned about the second seat to playback the second audio output signal.

12. The method of claim 11 further comprising receiving a first incoming audio signal including first primary audio data from the first mobile device for playback.

13. The method of claim 12 further comprising receiving a second incoming audio signal including second primary audio data from the second mobile device for playback.

14. The method of claim 13 further comprising receiving a first control signal indicative of a first desired venue from the first mobile device to playback the first primary audio data.

15. The method of claim 14 further comprising adjusting reverberation of the first incoming audio signal based on the first control signal to playback the first primary audio data in the first desired venue at the first seat in the vehicle.
